# FASCICULE DE BREVET EUROPEEN

(11) **EP 0 900 612 B1**
(45) Date de publication et mention de la délivrance du brevet: **16.10.2002**
(21) Numéro de dépôt: 97810635.9
(22) Date de dépôt: 05.09.1997
(51) Int. Cl.: B23B 13/10, B23B 13/08

(54) **Dispositif d'alimentation automatique de barres, notamment pour tour CNC**
Automatische Zuführeinrichtung für Stangen, insbesondere für CNC-Drehbänke
Device for feeding automatically bars, especially for CNC-lathes

(43) Date de publication de la demande: 10.03.1999
(73) Titulaire: Geiser, Markus Samuel, 2515 Prêles (CH)
(72) Inventeur: Geiser, Markus Samuel, 2515 Prêles (CH)
(74) Mandataire: AMMANN PATENTANWAELTE AG BERN

(56) Documents cités:
- EP-A- 0 026 370
- EP-A- 0 559 094
- EP-A- 0 587 248
- EP-A- 0 631 833
- BE-A- 735 412
- DE-C- 970 427
- DE-U- 9 109 290
- FR-A- 2 528 342
- US-A- 3 353 688
- US-A- 3 937 331
- US-A- 4 423 651
- LINK H: "ERFAHRUNGEN MIT REAKTIONSHARZBETON IM WERKZEUGMASCHINENBAU" WERKSTATT UND BETRIEB, vol. 121, no. 8, 1988, MÜNCHEN, page 641/642 XP002056419
- PATENT ABSTRACTS OF JAPAN vol. 096, no. 003, 29 mars 1996 & JP 07 299605 A (IKURA SEIKI SEISAKUSHO:KK), 14 novembre 1995,

## Description

L'invention concerne un dispositif d'alimentation automatique de barres, notamment pour tour CNC, selon le préambule de la revendication indépendante 1 (voir EP-A-559094).

Des dispositifs d'alimentation, comprenant un dispositif de chargement de barres, un dispositif d'avancement de celles-ci et un dispositif de centrage, sont mis en oeuvre dans des appareils couramment appelés ravitailleurs, dont il existe différents types sur le marché.

Ces appareils ont pour but de ravitailler automatiquement notamment des tours automatiques ou CNC, ce qui permet d'améliorer sensiblement le rendement de ces derniers et de réduire considérablement les coûts des pièces usinées sur les tours de ce genre.

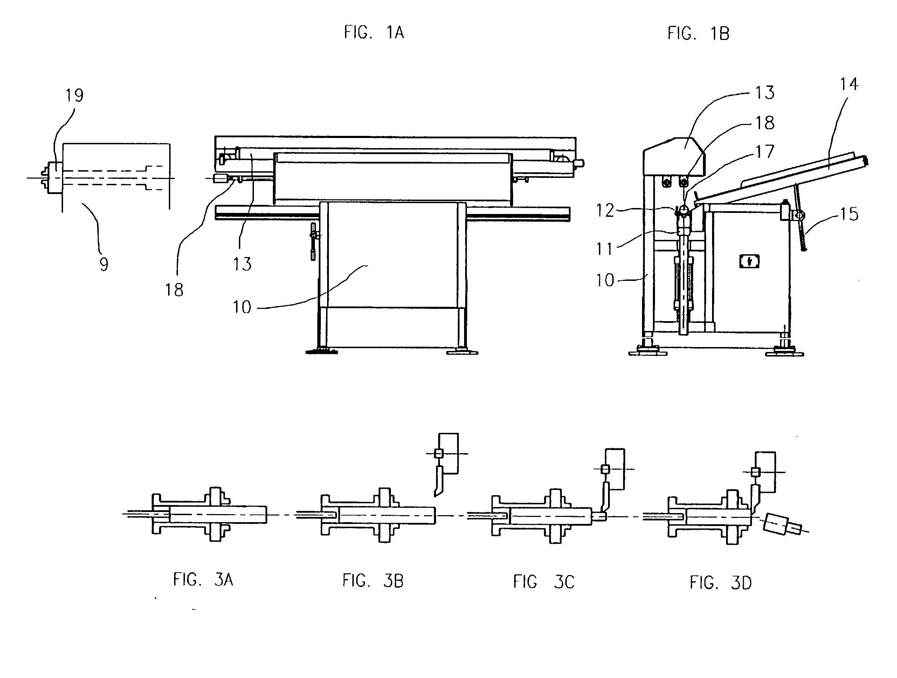

Les ravitailleurs connus se présentent sous une forme telle que représentée très schématiquement dans les figures 1A et 1B (vue de face et vue de profil respectivement): on aperçoit un bâti 10, un berceau 11 que surmonte ce bâti, un banc 12, en forme de V très ouvert, ce berceau pouvant être coiffé d'un capot 13, et une trémie 14 à plan incliné, dont l'inclinaison est réglable au moyen d'un dispositif 15. Une barre 17, qui se trouve sur le banc 12, a été préalablement transposée de la trémie 14 sur ledit banc. Elle est destinée à être usinée sur un tour, représenté par un mandrin 19 et une poupée 9, après avoir été introduite dans cette poupée au moyen d'un dispositif d'avancement 18.

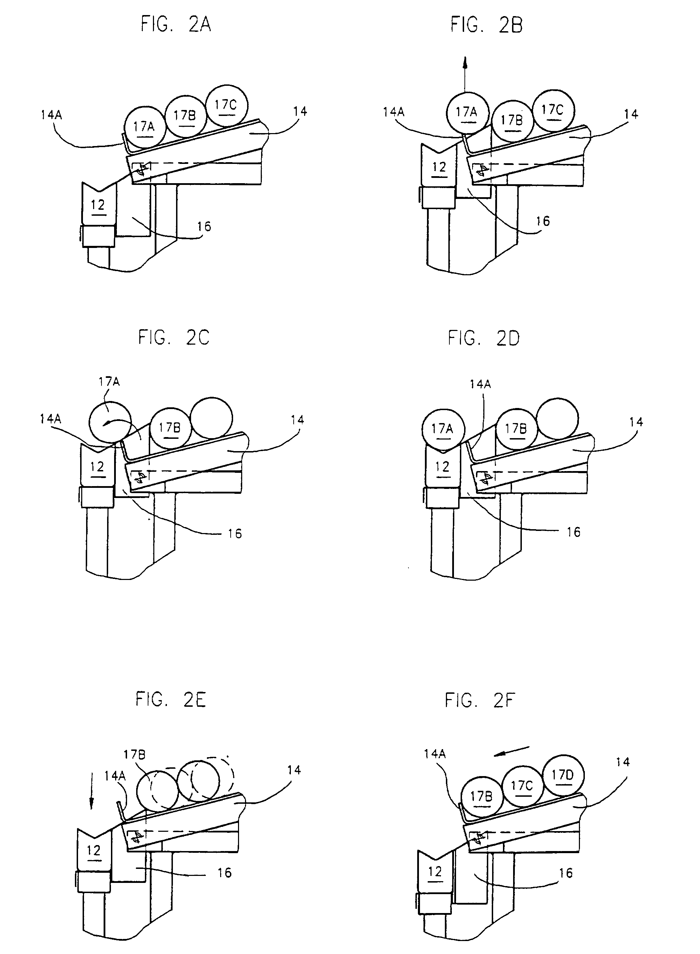

Le principe de fonctionnement du dispositif d'alimentation connu peut être aisément exposé à l'appui des figures 2A à 2F montrant un dispositif vu de profil:

A la figure 2A, les barres à usiner 17A, 17B, 17C etc. sont placées ou stockées sur la trémie 14 et bloquées grâce à un rebord 14A. Le banc 12 et un jeu de griffes 16 (dont une seule est visible) qui y est relié se trouve dans une position définie, correspondant à celle représentée à la figure 2D.

Dans un premier temps, l'ensemble 12, 16 monte, les griffes soulevant la première barre 17A dans le sens de la flèche verticale (figure 2B) jusqu'à ce que ladite barre bascule par-dessus le rebord 14A de la trémie 14 (figure 2C) et tombe brusquement dans le V du berceau (figure 2D, montrant la position du banc 12 où l'axe de la barre 17A et l'axe de la poupée du tour ont le même support). Durant ces opérations, la barre suivante 17B est retenue par le flanc arrière des griffes 16.

Dans un deuxième temps (non-représenté) un poussoir court, appelé drapeau (premier module d'un dispositif d'avancement ou de poussée), actionné en général par un système pneumatique, pousse la barre à usiner dans la poupée du tour.

Dans un troisième temps, l'ensemble 12, 16 redescend dans le sens de la flèche (figure 2E) jusqu'à reprendre sa position initiale de la figure 2A (figure 2F). Concomitamment, la barre suivante 17B, qui n'est plus retenue par les griffes 16, roule sur le plan incliné de la trémie 14 (cf. flèche à la figure 2F) et vient heurter le rebord 14A qui en bloque la course.

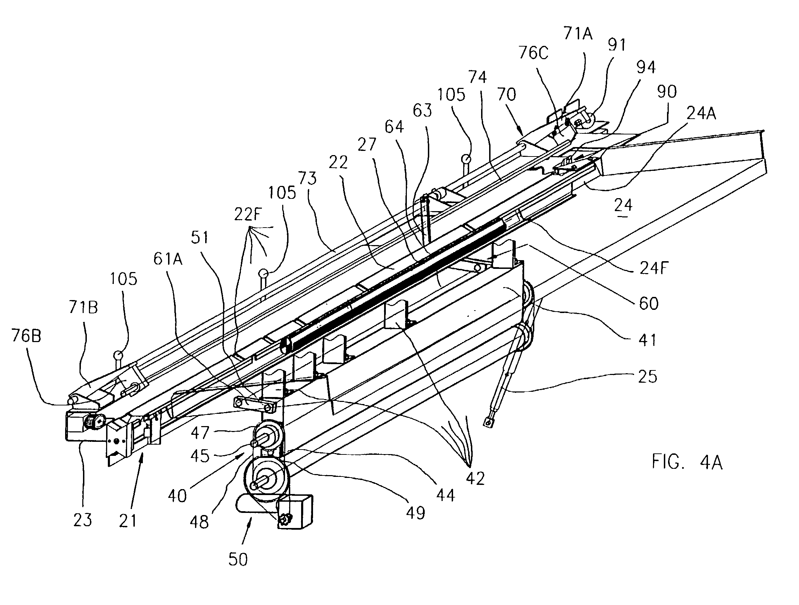

Dans un quatrième temps enfin, le drapeau recule et fait place à un long poussoir (deuxième élément du dispositif d'avancement), qui aura pour tâche d'assurer l'avance ou les avances successives de la barre jusqu'à usinage complet de celle-ci, selon les cycles illustrés aux figures 3A à 3D: L'avance matière (c'est-à-dire de la barre 17A) est réalisée sous l'action du poussoir 18, les mors du mandrin 19 étant ouverts (Fig. 3A). Puis la barre est serrée (Fig. 3B) et l'usinage effectué (Fig. 3C). Lorsque l'usinage est terminé, un tronçonnage est effectué (Fig. 3D), et un nouveau cycle d'usinage, par exemple de la même barre 17A, peut alors commencer, c'est-à-dire que les mors du mandrin s'ouvrent, le poussoir 18 est avancé et pousse la barre 17A pour la déplacer d'une distance définie.

Ces appareils et dispositifs présentent plusieurs sortes d'inconvénients.

Tout d'abord, les opérations de chargement s'accomplissent brutalement, puisque l'appareil est soumis à deux chocs successifs lors de chacune de ces opérations.

Un premier choc procède de la chute de la barre 17 à usiner (17A, 17B, etc. dans les figures 2A à 2F) dans le V du banc du haut des griffes (figure 2C).

Un deuxième choc procède de la chute de la barre suivante 17B contre le rebord d'arrêt 14A de la trémie (voir figures 2E et 2F) cette barre étant elle-même sous la poussée des barres supérieures 17C, 17D etc. (figure 2F).

A titre indicatif, le poids d'une seule barre d'un diamètre de 80 mm et de longueur 1'200 mm est de 47 kg environ.

On conçoit aisément que ces chocs sont, quant à leurs effets, dommageables aussi bien pour l'appareil ravitailleur lui-même que pour le tour qu'il alimente. Plus particulièrement, il provoque à la longue un désalignement croissant entre le ravitailleur et la poupée du tour à un point tel qu'à partir d'un certain moment, les barres viendront heurter la poupée, ce qui entraînera alors de graves dégâts (notamment détérioration des roulements de la poupée, précision d'usinage de plus en plus médiocre et réduction de la durée de vie du tour).

Un autre grave inconvénient réside dans l'absence de polyvalence de l'appareil, puisque les dispositifs connus ne permettent que le chargement de barres, mais non leur déchargement. Or, dans certains cas, par exemple lorsqu'il s'agit d'usiner des arbres à une extrémité, il serait avantageux, l'usinage terminé, de décharger ces dernières au moyen du ravitailleur.

Dans certains ravitailleurs connus, l'avancement fait intervenir deux cylindres disposés parallèlement, côte à côte et à distance l'un de l'autre, un premier cylindre étant affecté au poussoir court (drapeau), un second au poussoir long. Le chargement comprend trois étapes: d'abord l'introduction de la barre au moyen du drapeau, mû par le premier cylindre, et le retour en arrière dudit drapeau, ensuite un déplacement latéral des deux cylindres au moyen d'un chariot à déplacement horizontal, de sorte à placer le poussoir long dans l'axe de la poupée, c'est-à-dire de la barre, enfin l'avancement du poussoir long, mû par le deuxième cylindre. D'autres ravitailleurs sont equipés de deux poussoirs court et long superposés verticalement et montés sur un chariot à déplacement vertical. Dans d'autres ravitailleurs enfin, plus perfectionnés déjà, les deux poussoirs sont montés sur une bascule, le poussoir court ou drapeau exécutant la première introduction, le poussoir long poussant la barre dans la poupée en vue de l'usinage, ces deux poussoirs étant actionnés par un même cylindre, mais la bascule restant actionnée par un vérin séparé. Tous ces dispositifs gagneraient à être moins compliqués, plus rationnels et moins coûteux.

Quant aux dispositifs de centrage connus, leur manipulation n'est pas aisée et les opérations de centrage ne s'effectuent ni rapidement, ni rationnellement.

EP-0559094 propose un dispositif de chargement d'une barre à usinger (1) dans un canal en forme de V (16) permettant d'eviter les chocs lors de l'opération du chargement. Mais les moyens mis en oeuvre sont relativement complexes, donc onéreux dans leur fabrication, et le banc n'est pas fixé.
Une revue "Werkstatt und Betrieb" no. 8/1998 (réf. XP002056419) divulgue un dispositif de chargement d'une barre, celle-ci étant posée également sans choc sur un banc en forme de V au moyen d'un levier dont l'une des extrémités est reliée à un arbre d'articulation agencé à la périphérie d'une zone entraînée en rotation, et dont l'un des flancs, à l'autre extrémité, demeure en appui sur un guide.
Au cours de l'opération, le banc reste fixe. Mais tout comme dans EP-0,559,094, le problème de déchargement de la barre, opération qui doit également s'effectuer sans chocs reste entier, tout comme celui de la combinaison la plus judicieuse et la moins onéreuse quant à sa fabrication des moyens de chargement et de déchargement.
Le but de l'invention est de réaliser un dispositif résolvant ce double problème.

Ce but est atteint grâce aux moyens définis dans la revendication indépendante 1.

Les revendications dépendantes définissent des moyens permettant de réaliser l'invention à bon compte.

On va décrire maintenant une forme d'exécution du dispositif à titre d'exemple non limitatif, à l'appui des dessins annexés, où
- les figures 4A, 4B, 4C: sont des vues en perspective du ravitailleur, sans le bâti;
- les figures 4D, 4E: sont des vues en perspective du module d'avancement long;
- la figure 5: est une coupe selon un plan passant par les axes des arbres 45, 51 représentés à la figure 4A;
- les figures 6A à 6F: sont des vues de profil montrant des mouvements du dispositif de chargement/déchargement et d'éléments du module d'avancement long, lors du chargement;
- les figures 7A à 7F: sont des vues de profil montrant des mouvements du dispositif de chargement/déchargement et d'éléments du module d'avancement long, lors du déchargement;
- les figures SA, 8B: montrent la courbe caractéristique décrite lors du chargement/déchargement;
- la figure 9: représente schématiquement les phases de chargement/déchargement d'une barre destinée à être usinée à une extrémité;
- les figures 10A, 10B: montrent une vue de profil et une vue en élévation partielle des modules d'avancement court et long dans toutes les positions de 60° à 315° ;
- les figures 11A, 11B: montrent une vue de profil et une vue en élévation partielle des modules d'avancement court et long dans la position 315°;
- les figures 12A, 12B: montrent une vue de profil et une vue en élévation partielle des modules d'avancement court et long dans la position 0°/360° (module d'avancement long verrouillé);
- les figures 13A, 13B: montrent une vue de profil et une vue en élévation partielle des modules d'avancement court et long dans la position 0°/360° (module d'avancement long déverrouillé); et
- les figures 14A, 14B, 14C: montrent en coupe un dispositif de centrage du banc;
étant précisé que les principes de fonctionnement des ravitailleurs connus viennent d'être exposés à l'appui des figures 1A, 1B; 2A - 2F; 3A - 3D (art antérieur).

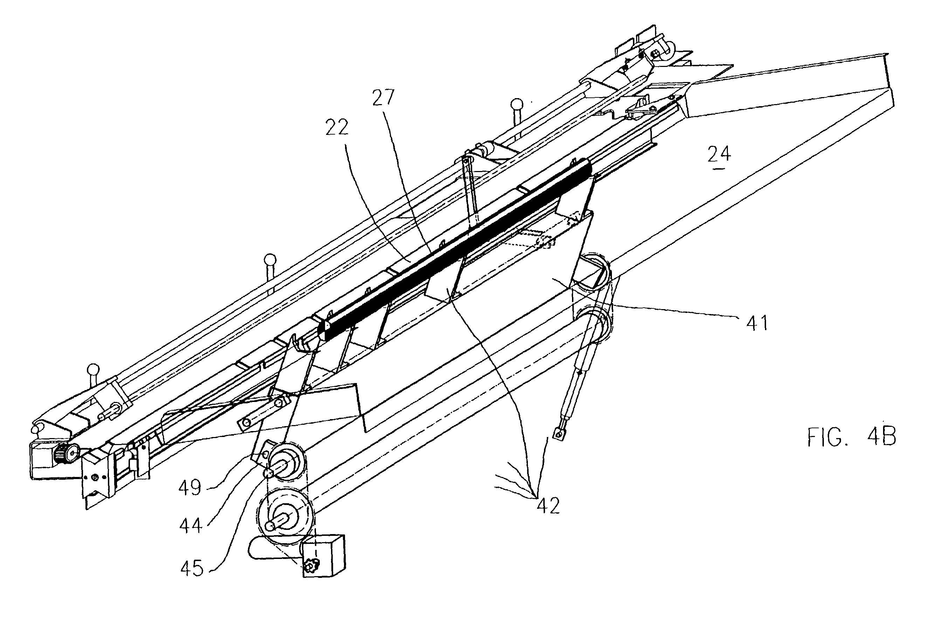

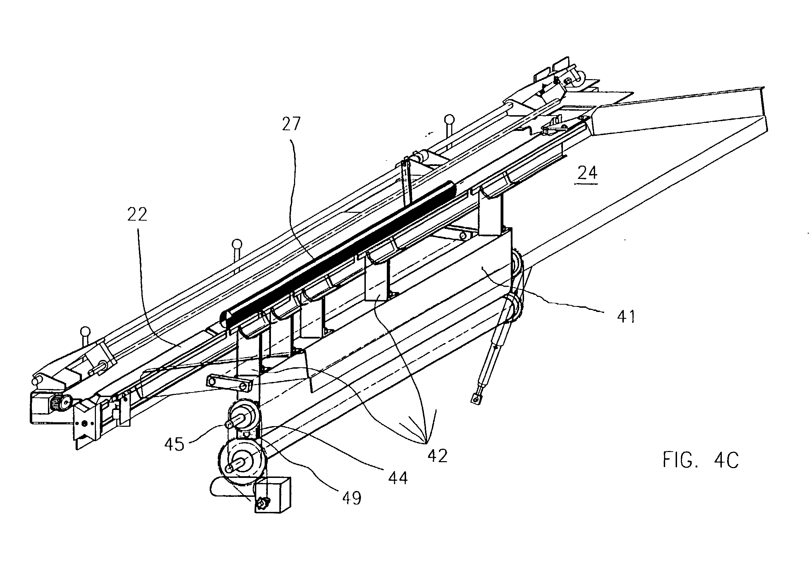

Les figures 4A, 4B, 4C montrent des vues en perspective, schématiques, d'un dispositif 40 de chargement/déchargement de barres, de modules 70, 90, formant les éléments essentiels d'un dispositif d'avancement (ou de poussée) des barres vers le tour ainsi qu'un dispositif 60 relié à une tige de distance 63, cette dernière participant à la coopération entre les dispositifs 40, 60 et le module d'avancement long 70 (appelé communément poussoir long, parce qu'il comporte une tige-poussoir longue 74 tenue par deux étriers 71A, 71B). Ces quatre ensembles 40, 60, 70, 90 sont abrités dans le ravitailleur.

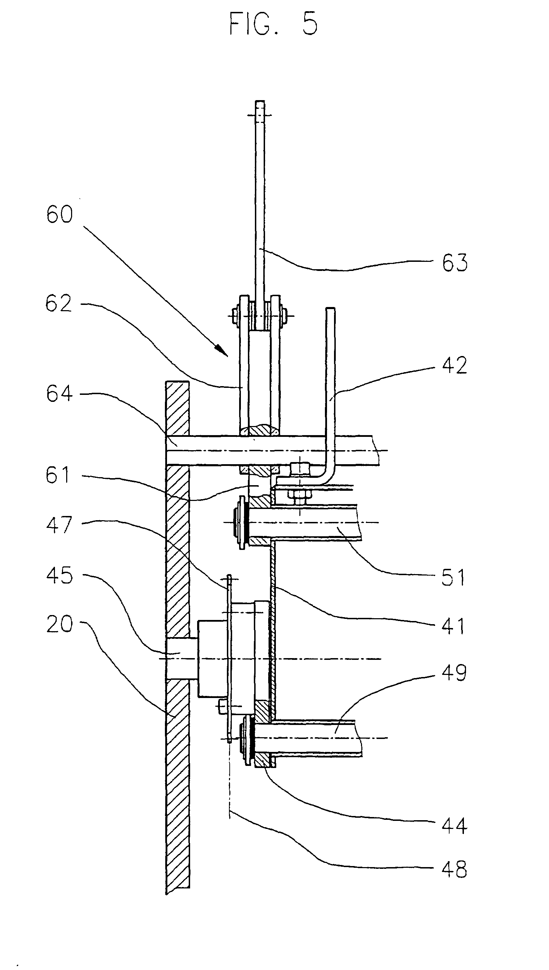

Plus particulièrement, on aperçoit un berceau 21 (monté sur un bâti non représenté ici, mais dont une paroi est visible à la figure 5), sur lequel est agencé un banc 22 dont on voit la face supérieure en forme de V et qui présente des fentes 22F. Une barre 27, appelée à être usinée et donc à être préalablement posée sur ledit banc 22, se trouve contre le rebord 24A d'une trémie 24 à plan incliné dont l'inclinaison peut être réglée au moyen d'un vérin 25 (sur les figures, la trémie est représentée "transparente", c'est-à-dire qu'elle laisse apparaître des parties se trouvant derrière elle).

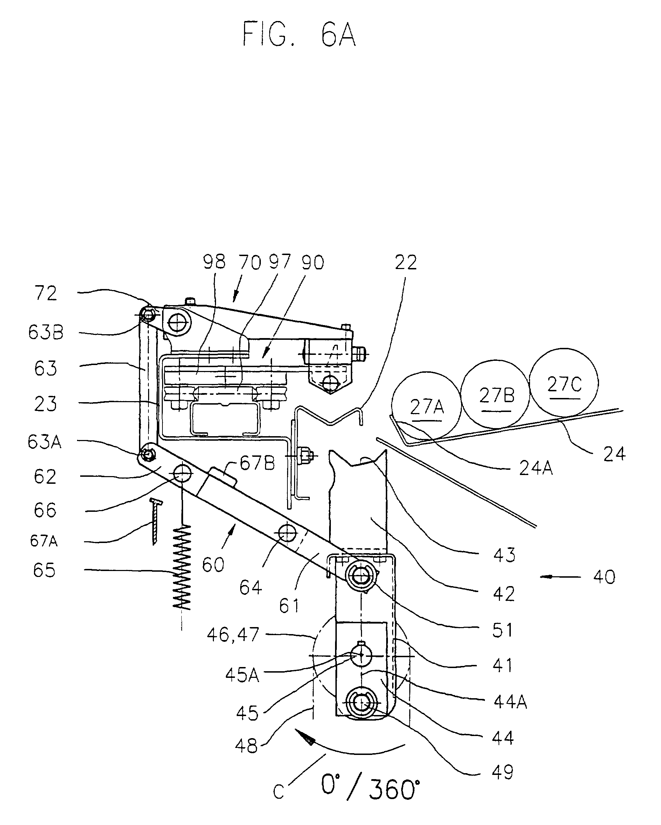

Le berceau comporte encore un conduit tubulaire 23 en forme de U couché solidaire du banc 22. Ce conduit est prévu pour le déplacement, d'une extrémité à l'autre du banc 22, du premier module d'avancement court 90 (ou poussoir court, plus communément appelé drapeau), dont on aperçoit qu'une patte 94, sous l'action d'un chariot 98, mû par des moyens-moteur 91 et guidé par un rail de guidage 97 (le chariot 98 et le rail 97 ne sont pas visibles sur la figure 4A, mais représentés par exemple à la figure 6A).

Le dispositif de chargement/déchargement 40 comprend notamment une bascule 41 - auquel est fixé un jeu de griffes 42 par des moyens de fixation non référencés - bascule et griffes présentant la même orientation (sur la figure 4A, la partie supérieure des griffes 42 a été tronquée). Ces deux éléments peuvent être mis en mouvement grâce à des moyens-moteurs et démultiplicateurs 50. On observe que cette bascule comporte des fentes ou entailles 24F, dont une seule est visible à la figure 4A. Ces entailles sont exactement en regard des entailles 22F. Le nombre des entailles 22F et 24F correspond au nombre de griffes 42, ledites entailles étant prévues pour laisser le passage à ces dernières. Selon l'exemple, le nombre de griffes que comporte le jeu 42 est de cinq.

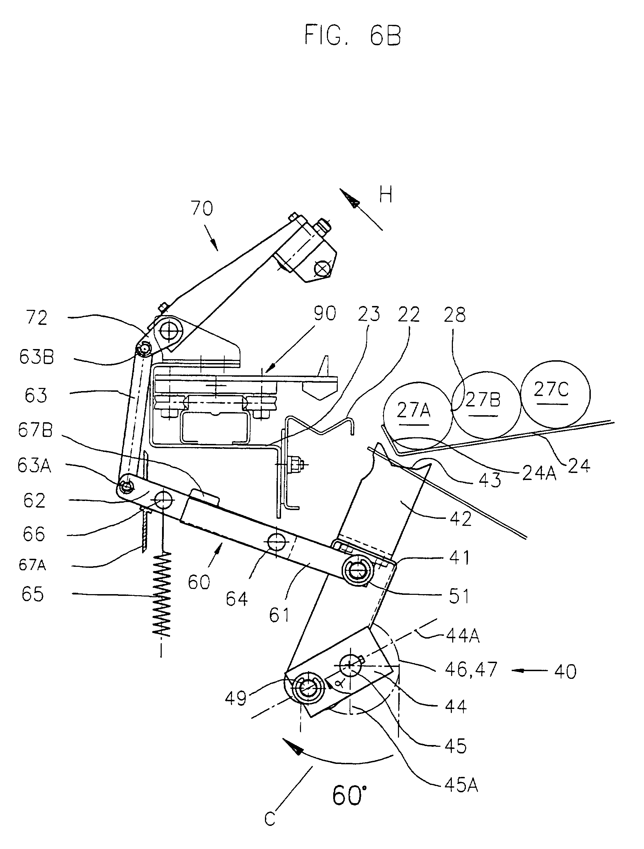

Le mouvement précité va être exposé, sommairement d'abord dans le paragraphe qui suit, puis en détail à l'appui des figures 6A, 6B, etc.

En se référant simultanément à la figure 4A et à la figure 5 qui est une coupe partielle selon un plan passant par les axes des arbres 45 et 51 (position représentée à la figure 4A), on comprend que la bascule 41 et, par conséquent, le jeu de griffes 42 coopèrent, d'une part, avec un excentrique ou came 44 entraînée en rotation par une roue à chaîne 47 reliée aux moyens-moteur 50 par une chaîne 48, autour d'un arbre 45 monté sur le bâti du ravitailleur, cette came présentant un arbre excentré 49 sur lequel le bas de la bascule est monté articulé, c'est-à-dire libre en rotation. Ils coopèrent, d'autre part, avec un élément 61 du dispositif 60, ce dispositif étant agencé d'un côté de la bascule et comprenant un jeu de deux leviers 61, 62 (voir aussi figure 6A) articulables autour d'un arbre 64 dont les extrémités sont montés dans le bâti également, l'une des extrémités du dispositif 60, plus précisément du levier 61, étant montée articulée avec la bascule 41 autour d'un arbre 51, ce dernier étant disposé dans la partie supérieure de ladite bascule. Les arbres 51, 64 passent dans une pièce de soutien 61A, agencée de l'autre côté de la bascule 41. Cette pièce 61A correspond au levier 61. De manière générale, il va de soi pour l'homme de l'art que des organes tels que came 44, roue 47 sont aménagés de part et d'autre de la bascule 41 (même si nos considérations se limitent ici, par souci de simplification, à un seul côté de la bascule).

On note que l'entraînement en rotation de l'excentrique 44 peut se faire aussi bien dans le sens des aiguilles d'une montre (sens négatif) que dans le sens inverse (sens positif) (selon la place de l'observateur).

Les vues en perspective des figures 4B et 4C sont analogues à celle de la figure 4A (aussi ne contiennent-elles pas toutes les références), sauf qu'à la figure 4B on voit que la barre 27 est prise et portée par le jeu de griffes 42 et qu'à la figure 4C, cette même barre 27 est posée sur le banc 22, la came ayant entraînée l'ensemble bascule 41/griffes 42 dans un mouvement dont les particularités vont être explicitées plus loin.

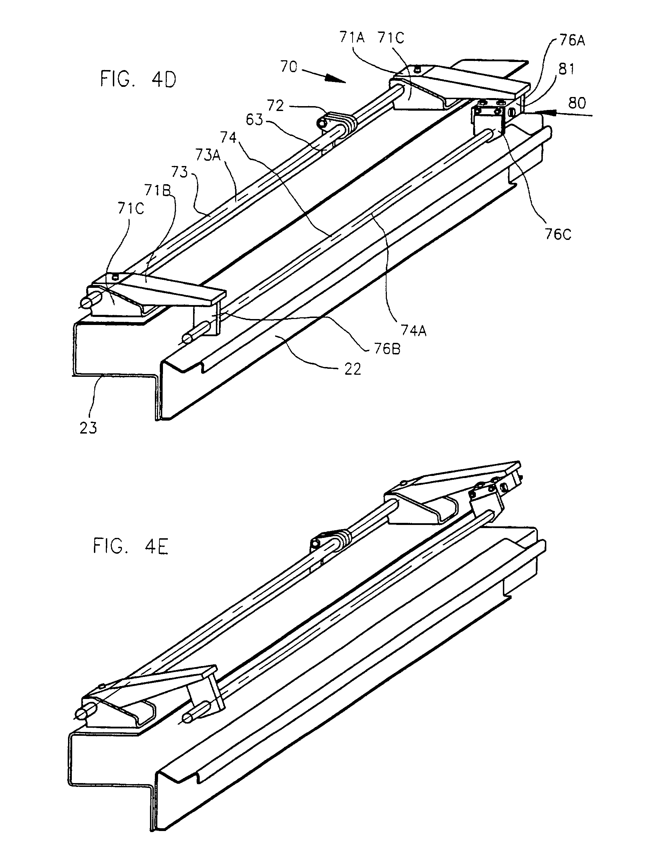

Avant de le faire, le seul dispositif 70 est représenté à plus grande échelle aux figures 4D, 4E, en positions basse et haute respectivement et sur le fonctionnement duquel on reviendra dans les développements qui suivront. Mentionnons ici que les étriers 71A, 71B sont pivotables autour d'un axe 73A d'une barre du levier 73, cette barre 73 étant liée en rotation avec lesdits étriers. La barre 73 est encore solidaire d'un levier 72 qui passe dans des alésages (non référencés) pratiqués dans des socles 71C fixés au conduit 23. Les étriers 71A, 71B portent la tige-poussoir 74 par l'intermédiaire, d'une part, d'un guide-poussoir 76B, fixé à l'étrier 71B, le poussoir 74 pouvant glisser dans un alésage (non référencé) que présente ce guide 76B et, d'autre part, d'un porte-poussoir 76A, fixé à l'étrier 71A, et d'un porte-poussoir 76 C, fixé, selon l'exemple décrit, à un bloc de verrouillage 81, l'ensemble 76C, 81 pouvant être solidaire du porte-poussoir 76A ou être désolidarisé de ce dernier. En position basse, l'axe 74A du poussoir 74 est dans le prolongement de l'axe de la poupée du tour.

La figure 6A montre une position définie du dispositif 40, appelée 0°/360°, par référence à un angle α dont la signification est donnée plus loin, à l'appui de la figure 6B. Pour les besoins de l'explication, on considérera cette position de même que celle affichée par les moyens faisant partie du dispositif d'avancement des barres, comme positions de départ.

Sur cette figure 6A, on aperçoit à nouveau, de profil cette fois-ci, le dispositif de chargement/déchargement 40, le dispositif d'avancement long formé par les modules 70 (poussoir) et court 90 (drapeau), ces deux modules pouvant être rendus solidaires ou indépendants l'un de l'autre, grâce à des moyens sur lesquels on reviendra plus loin, de même que le dispositif 60, et la tige de liaison, reliant ce dernier 40 au module 70. Par ailleurs, la compréhension des mécanismes est facilitée en procédant, avec l'aide des références, à la comparaison de cette figure 6A avec les figures 4A, 4D (ou 4E) et 5.

Comme il a été dit, le dispositif 60 comprend deux leviers 61, 62 articulables autour de l'arbre 64. La tige de liaison ou de distance 63 est reliée par son extrémité inférieure à l'extrémité extérieure du levier 62 par un pivot 63A et par son extrémité supérieure au levier 72 d'articulation par un pivot 63B. Selon l'exemple décrit, l'arbre 64 passe par l'extrémité intérieure du levier 62 et environ au milieu du levier 61.

Le levier 62 coopère encore avec un organe élastique 65, travaillant à la traction, lequel y est relié par son extrémité supérieure par une tige de retenue 66, l'autre extrémité de cet organe étant fixée au socle du bâti. Dans la position représentée (l'arbre excentré étant dans sa position la plus basse), le levier 61 est en butée contre un arrêt 67B fixé sur le levier 62. On aperçoit enfin un taquet 67A sur lequel le levier 62 peut prendre appui.

A partir de la position 0°/360° précitée, où l'axe 44A, qui est l'axe passant par les centres des arbres 45 et 49 et qui, selon l'exemple, est en même temps un axe de symétrie de l'excentrique 44 et l'axe vertical 45A de l'arbre d'entraînement 45 (on remarque une clavette, non référencée, assurant la liaison en rotation) se trouvent dans un même plan vertical, une rotation dans le sens négatif (sens de la flèche C) va être imprimée au pignon 47 (représenté symboliquement par un trait mixte), par l'intermédiaire de la chaîne 48 (représentée symboliquement également par un trait mixte), en vue du chargement d'une première barre 27A (actuellement en attente, avec d'autres barres 27B, 27C, etc., sur la trémie 24), sur le banc 22.

Ce mouvement de rotation, au cours duquel le centre (non référencé) de l'arbre excentré 49 se déplace le long d'un cercle 46 (représenté symboliquement par un trait mixte fin, se confondant ici avec la schématisation du pignon 47) va à présent être décomposé en plusieurs phases, de sorte à comprendre aisément les opérations de chargement de ladite barre sur ledit banc, phases au cours desquelles les griffes (et la bascule) effectuent un mouvement d'abord ascendant, puis descendant.

La figure 6B montre une position du dispositif où l'angle α que forment les deux axes 44A, 45A, est, selon la forme d'exécution décrite, de 60° (après rotation dans le sens de la flèche C). Il est clair que, en fonction des particularités constructives du dispositif et/ou du dispositif 60, cet angle - plus généralement α₁ - pourra être supérieur ou inférieur à 60°.

Dans cette position α₁, donc de 60° selon l'exemple, l'ensemble griffe 42 - bascule 41 est incliné vers la droite de sorte à se mettre quasiment en regard de la barre 27A.

Au cours de la rotation faisant passer l'angle α de 0° à 60°, la came ou excentrique 44 entraînent, par l'intermédiaire des arbres 49, 51, les leviers 61, 62 montés articulés autour de l'arbre 64, ce qui permet le dégagement progressif vers le haut du module 70 (flèche H) sous l'effet du ressort 65, jusqu'à ce que le levier 62 soit bloqué dans sa course (lorsque α = 60°), ce dernier venant s'appliquer contre le taquet 67A (on aperçoit aussi que l'extrémité du levier 61 située en regard de la butée 67B commence par se dégager de cette dernière).

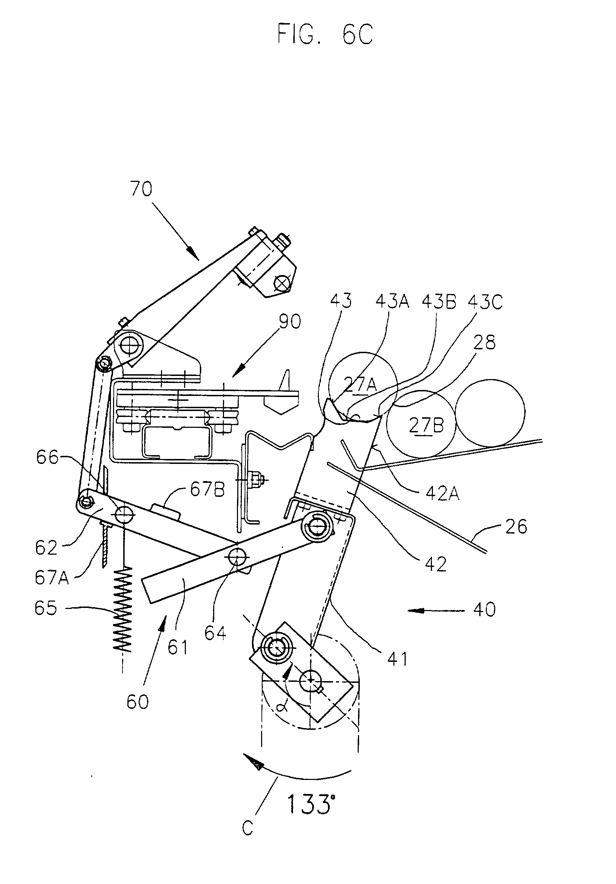

A la figure 6C - position 133° (l'angle α étant maintenant à 133° (rotation dans le sens de la flèche C)) - le jeu de griffes 42 porte la barre 27A, celle-ci reposant dans un siège 43 de chaque griffe. La forme particulière de cette cuvette à trois plans 43A, 43B, 43C, de longueurs différentes (dans le sens de cette vue), est telle qu'elle permet une tenue optimale en toutes circonstances. En effet, la barre prise par les griffes doit rester calée dans les sièges 43, en dépit de la poussée exercée sur elle par la ou les barres rangées derrière elle sur la trémie 24 (barres 27B, 27C, etc.). De plus, ce calage doit être assuré pour toutes les barres usuelles pour le chargement desquelles les ravitailleurs sont mis en oeuvre, cela tout au long de trajet de chargement, allant de la trémie 24 au banc 22, et du trajet de déchargement, allant du banc 22 à un plan incliné de déversement 26 (dont il sera fait état plus loin).

Rappelons que la trémie 24, tout comme le banc 22, présentent des entailles permettant le libre passage des griffes.

La prise de la barre 27A par les griffes 42 a lieu lorsque l'angle α est de l'ordre de 60° (légèrement supérieur à 60° selon l'exemple); au cours du mouvement qui suit, la barre 27B se déplacera vers le bas sous l'effet de la gravité, mais tout en restant en appui contre la première barre 27A le long de génératrices successives ou lignes d'appui 28.

A titre d'illustration, on aperçoit à la figure 6C (position 133°), que le jeu de griffes 42 a saisi la barre 27A et que la barre 27B est descendue progressivement, le mouvement de l'ensemble 41, 42, se poursuit, alors même que le libre déplacement de la barre 27B sous son poids, et sous le poids de toutes celles qui suivent, est empêché.

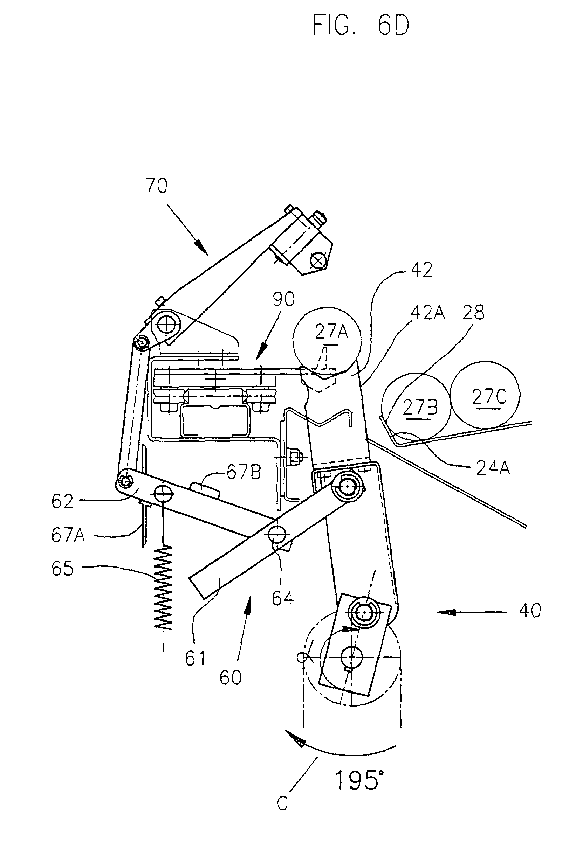

Puis la came 44 poursuit sa rotation dans le sens négatif, de sorte que l'ensemble 41, 42, avec la barre 27A, arrive à la position 195° représentée à la figure 6D. Au cours du mouvement qui a eu lieu entre les positions 133° et 195°, la ligne d'appui 28 de la barre 27B contre la barre 27A a transité "en douceur", étant passée progressivement contre les flancs arrières 42A des griffes 42.

De manière analogue, la ligne d'appui 28 de la barre 27B contre les flancs 42A a transité, une nouvelle fois en douceur, étant arrivée progressivement contre le rebord 24A.

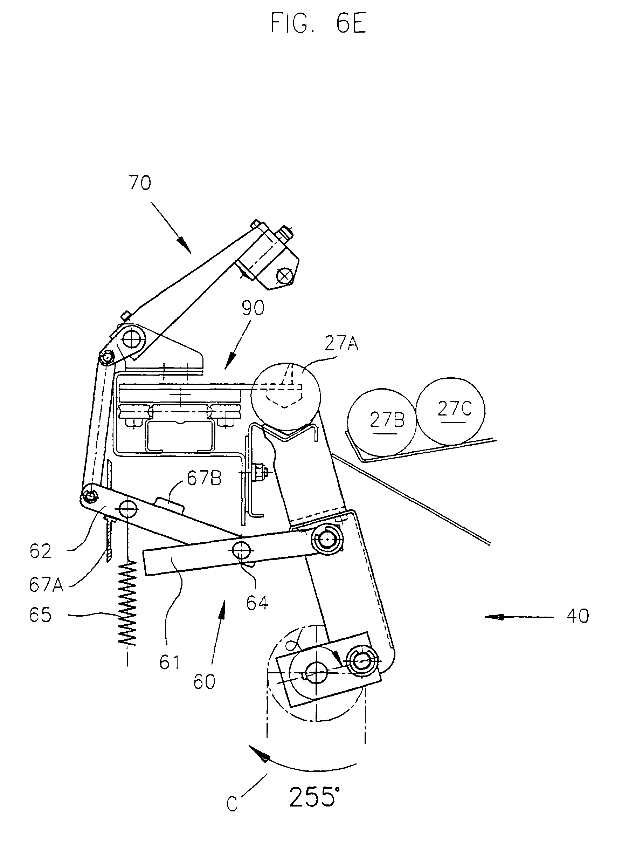

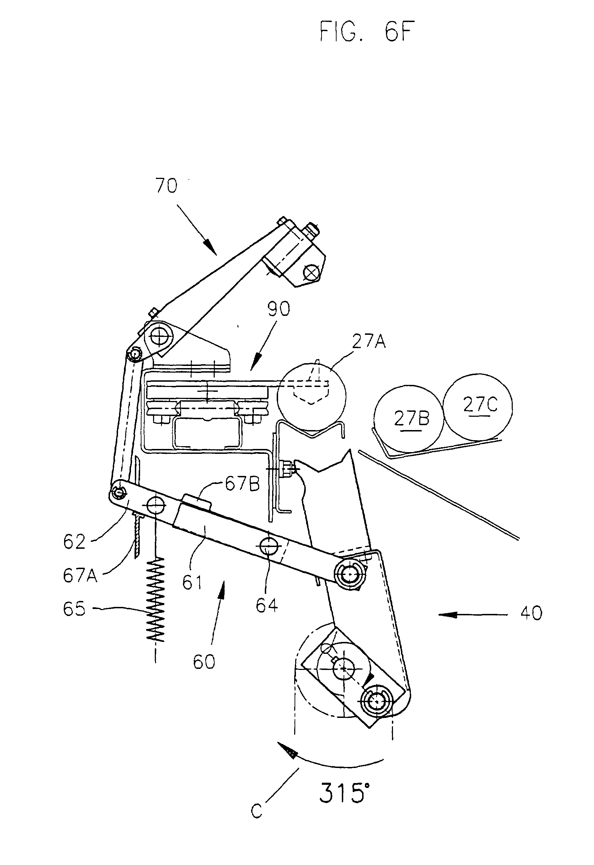

Le mouvement en rotation de la came 44 se poursuivant, amorçant un mouvement descendant, l'ensemble 41, 42 arrive à une position α₂, α₂ étant égal, selon l'exemple décrit à 315° (figure 6F), après que la barre 27A ait été posée dans le banc 22 (les mêmes observations que celles faites à propos de l'angle α₁ s'appliquent ici mutatis mutandis). Comme on le conçoit aisément à la lecture de la figure 6E, montrant la position 255°, cette pose s'effectue, là aussi, "en douceur".

De manière générale, on dira que le cycle de chargement se déroule alors que l'angle α passe de α₁ à α₂.

Ainsi, les deux chocs évoqués dans l'exposé de l'art antérieur, soit aussi bien celui provoqué sur le rebord 24A de la trémie 24 à plan incliné par la barre ou la série de barres succédant à la barre prise dans les griffes 42, que celui provoqué par la chute de cette dernière sur le banc, sont évités.

On observe qu'à la figure 6A (position 0°/360°), le module 70 est en position basse, tandis que sur les figures 6B à 6F (positions 60° à 315°), il est maintenu en position haute, le levier 62, articulé autour de l'arbre 64, étant résté un appui contre le taquet 67A, sous l'effet du ressort 65, tandis que le levier 61, articulé autour de l'arbre 64 également et accompagnant le mouvement de la bascule 41, auquel il est lié par l'arbre 51, s'est dégagé de plus en plus de la butée 67B (Fig. 6B à 6D) puis est revenu vers cette dernière (Fig. 6E - 6F). En d'autres termes, le module d'avancement long 70 coopère avec les dispositifs de chargement/déchargement 40, 60 par l'intermédiaire, d'une part, du levier 61, qui constitue aussi, dans le même temps, un organe du dispositif 40 et, d'autre part, du levier 62 et de la tige 63. De ce fait, les mouvements de ce dispositif et ceux de ce module 70, lequel passe d'une position basse à une position haute et inversement, sont combinés entre eux.

Précisons qu'au cours de l'actionnement du dispositif 40, qui provoque l'actionnement du dispositif 60, les arbres 45 et 64 sont fixes, tandis que les arbres 49 et 51 sont mobiles.

Le dispositif 40 est également remarquable du fait qu'il permet non seulement le chargement, mais aussi le déchargement, cela sans que les organes du ravitailleur ne subissent le moindre choc.

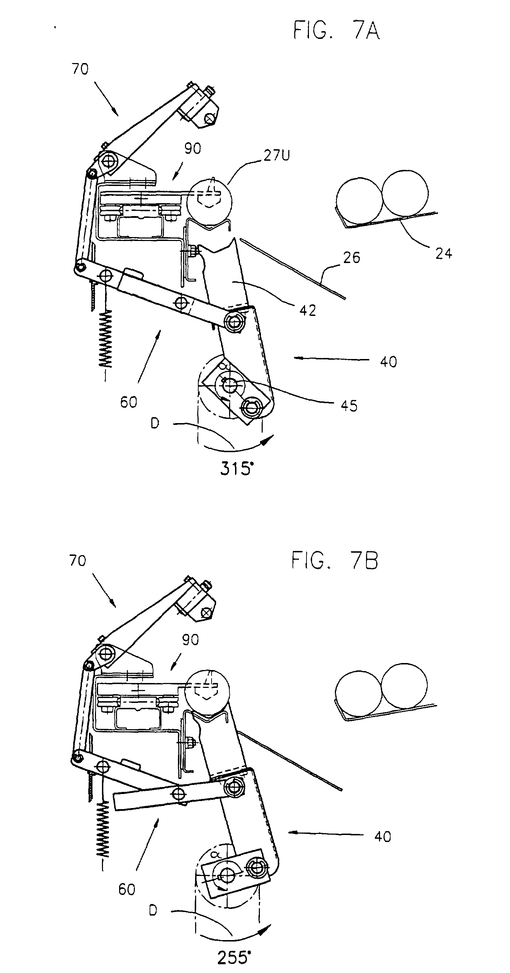

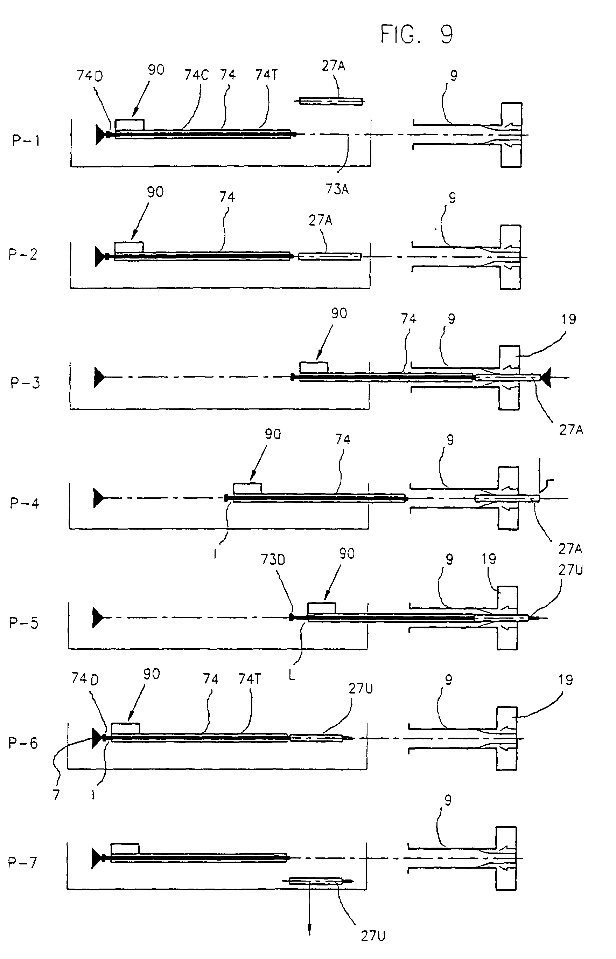

A partir de la position 0°/360° (module 70 bas, voir Fig. 6A), on imprime à la came 44 un mouvement de rotation autour de l'arbre d'entraînement 45 dans le sens positif cette fois-ci, jusqu'à ce que le dispositif 40 arrive en position 315° représentée à la figure 7A (rotation dans le sens de la flèche D), le module d'avancement 70 étant ramené en position haute. La position α₂ = 315° de la figure 7A est équivalente à celle montrée à la figure 6F, sauf que la trémie 24 est placée en retrait au moyen d'un dispositif connu et non représenté. Le jeu de griffes 42 est quasiment en regard d'un arbre usiné 27U, appelée à être saisi. Par ailleurs, les mouvements du dispositif 40 et ceux du dispositif 70 sont combinés de façon équivalente à celle invoquée à propos du chargement. L'arbre 27U a été replacé sur le banc 22 selon un procédé sur lequel on reviendra à l'appui de la figure 9.

A la position 255° de la figure 7B, la rotation dans le sens de la flèche D se poursuivant, la barre 27A vient d'être soulevée par le jeu de griffes 42.

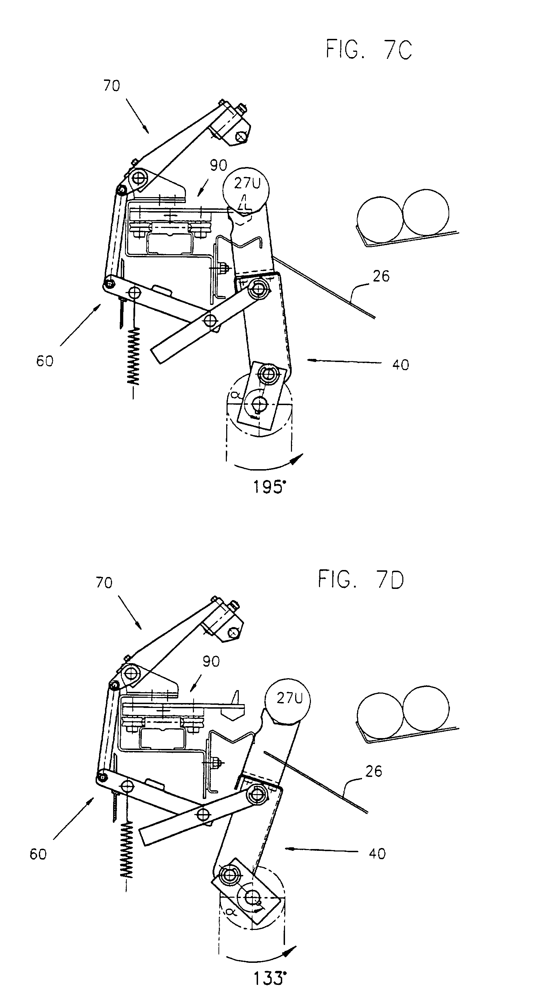

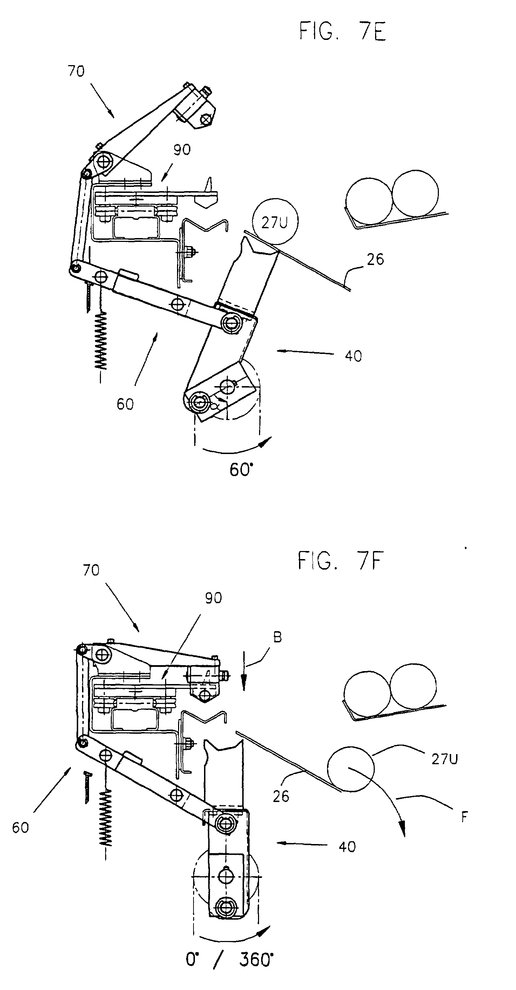

On aperçoit à l'appui des figures 7C, 7D et 7E que ladite barre est transférée vers le plan incliné de déchargement 26, la came 44 imprimant à l'ensemble 42, 41 un mouvement exactement inverse de celui qui a été décrit en détail plus haut à propos du chargement, et qu'il est donc inutile d'expliquer une nouvelle fois.

C'est dans ces conditions que la pose de la barre 27U sur le plan incliné 26 s'effectue, "en douceur", à la suite de la position α₁ = 60° (Fig. 7E).

De manière générale, on dira que le cycle de déchargement se déroule alors que l'angle α passe de α₂ à α₁.

Le jeu de griffes 42 se dégageant du plan incliné 26, lequel comporte, à l'instar de la trémie 24, des entailles (non représentées et non référencées) pour permettre le libre passage auxdites griffes, le dispositif retrouve la position 0°/360° (figure 7F), tandis que l'arbre usiné 27U roule sur le plan 26 pour être récupéré (flèche F) et que le module 70 se met en position basse (flèche B). On note par ailleurs, qu'au cours du mouvement de déchargement d'une barre usinée, les dispositifs 40, 60 et le module 70 affichent des positions chaque fois équivalentes à celles observées lors du chargement d'une barre.

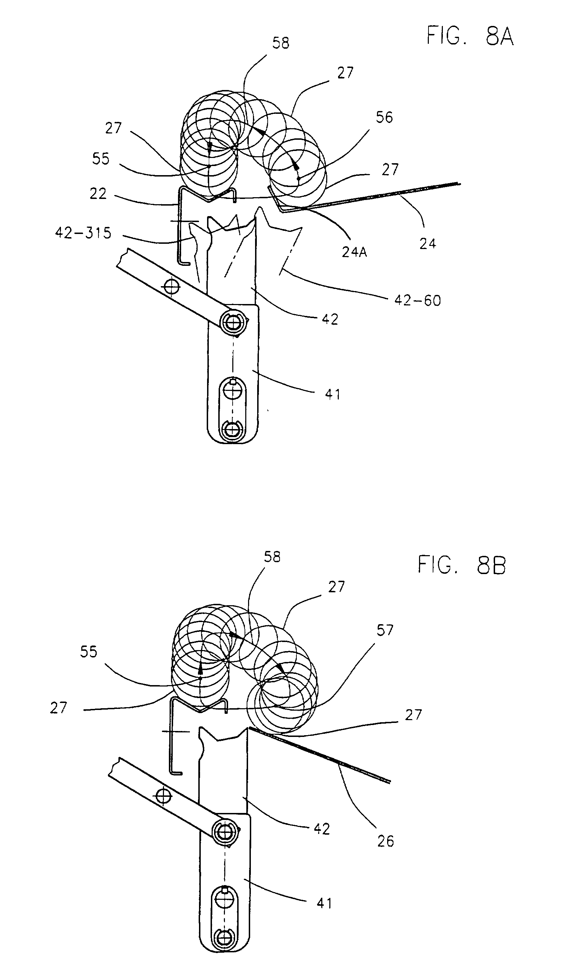

Les figures 8A et 8B montrent la courbe décrite par le centre d'une barre quelconque 27 lors de son chargement sur le banc 22 à partir de la trémie 24 et lors de son déchargement du banc 22 sur le plan 26.

Plus précisément, pour ce qui concerne le chargement (voir Fig. 8A), cette courbe part du point 56 (centre de la barre 27 lorsque celle-ci est contre le rebord 24A de la trémie 24) pour aboutir au point 55 (centre de cette même barre lorsqu'elle se trouve sur le banc 22), dans le sens négatif indiqué par la flèche. La portion de courbe allant du point 55 au point 56 (toujours dans le sens négatif) est celle que décrirait ledit centre si la barre était placée sur les griffes 42 entre, d'une part, la position 0°/360° et toutes les positions intermédiaires qu'occupe le jeu de griffes puisqu'à la prise de la barre dans la trémie 24 et, d'autre part, toutes les positions intermédiaires qu'occupe ce jeu à partir de la pose de la barre sur le banc 22 puisqu'à la position 0°/360°. A titre d'illustration, la figure 8A montre, en trait pointillé, deux positions intermédiaires des griffes 42 référencées 42 - 60 (position 60°) et 42-315 (position 315°).

De manière analogue, pour ce qui concerne le déchargement (voir Fig. 8B), la courbe part du point 55 (centre de la barre 27 située sur le banc 22) pour aboutir au point 57 (centre de la barre venant d'être posée sur le plan incliné 26), dans le sens positif indiqué par la flèche. Pour l'explication de la portion de courbe allant du point 57 au point 55 (toujours dans le sens positif), on appliquera mutatis mutandis celle venant d'être faite à propos du chargement.

On aperçoit que la courbe 58 résultant de la mise en oeuvre du dispositif 40 présente une forme pétaloïde caractéristique et originale.

Remarquons enfin que la vitesse du mouvement générant la courbe 58 sera de préférence uniforme, mais qu'elle ne doit pas nécessairement l'être. En effet, elle peut être facilement programmée de sorte à être, par exemple, relativement lente dans les zones des points 55, 56 et 57, et relativement rapide sur les tronçons séparant ces zones.

De plus, rappelons que le banc 22 est réglé de telle sorte que le centre 55, et par conséquent l'axe de la barre, se trouve sur l'axe de la poupée du tour. Il est intéressant d'observer aussi qu'au cours des opérations de chargement/déchargement d'une barre, le banc 22 n'est soumis à aucun mouvement.

Bien entendu, les moyens décrits que comprend le dispositif de chargement/déchargement 40 sont des moyens préférentiels permettant d'atteindre le résultat visé - la suppression des chocs - de manière simple, rationnelle et économique. Il est clair que l'homme du métier, à partir de la forme d'exécution décrite, non limitative, peut concevoir aisément d'autres formes d'exécution. Une telle variante constituerait, par exemple, à saisir et dégager la barre hors de la trémie par application de moyens de saisie à chaque extrémité de la barre (par exemple des bras exerçant des forces contraires, dirigées vers le centre de la barre et sur les bouts de celles-ci), ces moyens transportant et posant "en douceur" la barre sur le banc 22, tandis que des doigts de retenue escamotables sous la trémie 24 se dégageraient hors de fentes aménagées dans la trémie, de sorte à freiner la barre suivante, pour l'accompagner dans la descente le long du plan incliné, et la laisser aller lentement contre le rebord de trémie, ce qui évitera tout choc, lesdits doigts s'escamotant à nouveau progressivement.

Pour procéder au déchargement d'un arbre usiné (référencé plus haut 27U), il convient bien sûr de transporter auparavant cet arbre de la machine-outil sur le banc 22 en V, d'où il sera saisi par le jeu de griffes selon le procédé expliqué plus haut.

La figure 9 montre en sept phases non seulement l'opération de déchargement, mais aussi de chargement d'arbres devant être usinés qu'à une extrémité.

Lors des phases P-1, P-2, la barre 27A passe de la trémie dans le banc (éléments non référencés ici), puis est introduite dans la poupée 9 du tour, l'extrémité avant émergeant du mandrin 19 sur une distance définie (P-3).

A la phase 4, la tige-poussoir est retirée de la poupée au moyen du module 90, les mors du mandrin sont fermés et la barre est usinée.

L'opération de retrait de la barre usinée (qui porte maintenant la référence 27U), fait l'objet des phases 5 et 6.

Précisons auparavant que la tige-poussoir 74 comprend un tube 74T et, à l'intérieur, un organe 74C, appelé clou, pourvu à l'arrière d'une tête 74D. Cette tête émerge de la partie arrière du tube sur une distance 1 au cours des phases P-1 à P-4 (le tube pouvant se solidariser (et se désolidariser) du module d'avancement 90).

Le tube 74T (choisi selon le diamètre des barres à usiner), présente une partie avant fendue.

A la phase 5, la barre 27U restant maintenue dans le mandrin 19, le tube 74T est actionné vers l'avant sous l'action du module 90, de sorte que la partie avant fendue du tube 74T passe par-dessus la partie arrière de l'arbre 27U pour s'agripper à celui-ci et faire l'effet d'une tenaille par l'action de l'élasticité de la partie avant fendue du tube 74T. Au cours de cette opération, la distance séparant la tête 74D du bord arrière du tube 74T va passer de l à L.

La tige-poussoir 74 est alors actionnée vers l'arrière, après que les mors du mandrin aient été ouverts, emmenant avec elle la barre 27U pour poser cette dernière sur le banc en V. Puis cette barre est libérée, le dispositif 90 continuant d'imprimer au tube 74T un mouvement vers l'arrière, tandis que la tête 74D vient buter contre un arrêt 7, de sorte que la partie avant fendue du tube 74T se dégage de la barre 27U, la distance séparant le tête 74D du bord arrière du tube 74T passant à nouveau de L à 1.

La barre 27U est alors déchargée (phase 7) dans les conditions vues plus haut.

On va décrire maintenant en détail le mode d'avancement d'une barre, c'est-à-dire le transport de celle-ci du ravitailleur vers le tour pour y être usinée, selon l'exemple totalement, c'est-à-dire jusqu'à une chute minimale. Cet avancement s'effectue en deux temps et implique une coopération entre les modules 70 et 90, au centre duquel se trouvent des moyens permettant de les solidariser et de les désolidariser et qui constituent également une caractéristique importante et originale permettant de pallier les inconvénients énumérés en introduction. Comme on l'a évoqué plus haut, ces moyens sont avantageusement constitués d'un dispositif de verrouillage/déverrouillage. Aussi, l'invention permet-elle de mettre en oeuvre un seul et même organe pour mobiliser les modules 70, 90, c'est-à-dire les éléments de ces modules intervenant dans la poussée des barres.

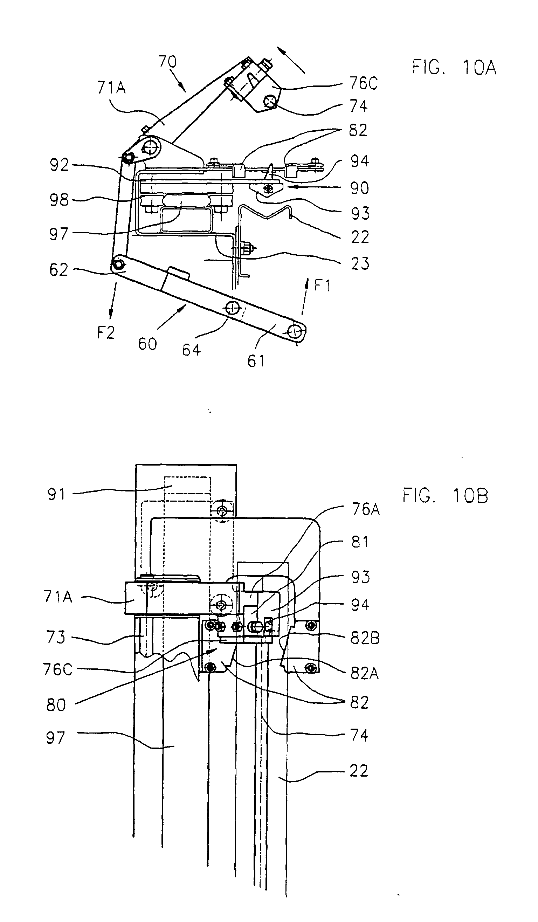

Les figures 10A, 10B montrent les positions et emplacements occupés par les modules 70, 90, vus de profil et de dessus (partielle), lorsque le dispositif 40 va de la position 60° à 315°, tels que nous les connaissons déjà à l'appui des figures 6B - 6F ou 7A - 7E). On sait que dans les intervalles de temps correspondants a lieu soit un cycle de chargement d'une barre, soit un cycle de déchargement. Des flèches F1, F2 symbolisent les forces auxquelles sont soumis les leviers 61, 62 du dispositif 60.

On distingue sur les figures 10A, 10B le module 70 avec l'étrier 71A (l'étrier 71B, auquel est fixé le guide-poussoir 76B, est visible à la figure 4A, à laquelle on peut se reporter également). Rappelons que l'étrier 71A comporte, dans la zone orientée vers l'extérieur du ravitailleur, le porte-poussoir 76A solidaire de l'étrier 71A et, du côté orienté vers l'intérieur du ravitailleur, le porte-poussoir 76C solidaire d'un bloc de verrouillage/déverrouillage 81, lequel fait partie du dispositif de verrouillage/déverrouillage 80. On distingue également (partiellement seulement à la figure 10B), le module 90, avec un corps 92 et un talon 93 pourvu d'un élément d'ancrage ou patte 94, corps qui est fixé sur un chariot 98 mobile, sous l'action des moyens-moteur 91, et guidé par un rail 97 (par l'intermédiaire de trois galets, non référencés).

Le dispositif 80 comporte encore une paire de glissières 82 fixées sur le conduit 23, dans la zone arrière (c'est-à-dire opposée à celle où s'effectue l'entrée des barres dans la poupée du tour), fixées de part et d'autre sur ledit banc. Ces glissières présentent des rebords 82A, 82B parallèles et obliques par rapport à l'axe du poussoir 74 et orientés vers le bas, ces rebords remplissant une fonction de guidage. L'écartement des rebords 82A, 82B correspond à la longueur du verrou 83. D'autres signes de référence sont portés sur la figure 10B, afin de faciliter la comparaison avec les figures précédentes, notamment la figure 4A.

Précisons que le mouvement de rotation de la came 44 (on a vu que la vitesse de celle-ci est uniforme ou non) est continu de la position 0°/360° jusqu'à la position 315°. Dans la position 315°, le dispositif 40 va marquer un arrêt, au cours duquel va s'effectuer la première phase d'avancement de la barre 27 dans la poupée du tour.

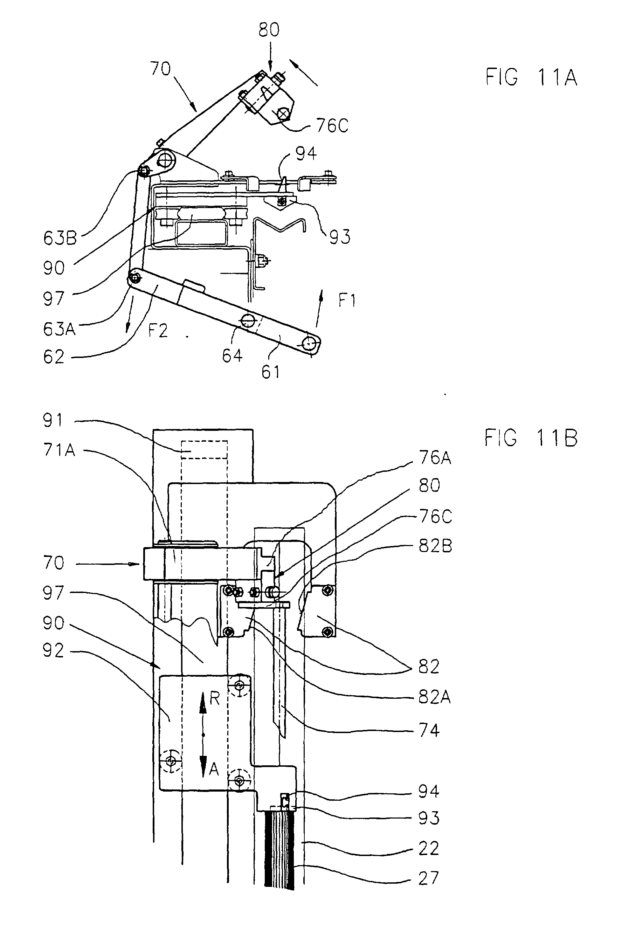

Cette phase est illustrée dans les figures 11A, 11B. En se référant plus particulièrement à la figure 11B, on aperçoit le module 90 à un instant t au cours de son déplacement vers l'avant (c'est-à-dire vers la poupée du tour (flèche A)) sous l'action du moteur 91, le talon 93 poussant la barre 27 posée sur le banc 22.

Lorsque l'avancement complet est effectué, c'est-à-dire lorsque la barre 27 est entièrement dégagée du banc 22 (et se trouve donc dans la poupée du tour, et pour partie, le cas échéant, hors du mandrin de serrage), le drapeau 90 est rappelé en arrière (flèche R) jusqu'à l'emplacement qu'il occupait auparavant, c'est-à-dire à celui que l'on aperçoit à la figure 10B.

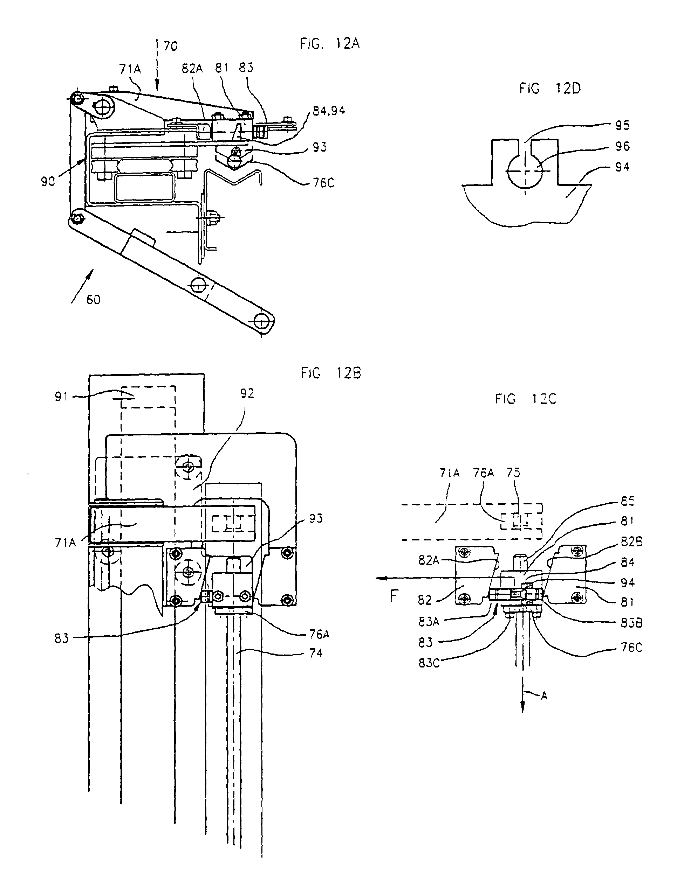

A ce moment-là, le module 70 va se mettre en position basse (figures 12A, 12B), de sorte que la patte 94 pénètre dans un logement 84 du bloc-écrou 81.

On remarque que ce bloc 81 comprend un verrou 83, représenté plus en détail à la figure 12C (où l'on voit également, en trait pointillé, l'étrier 71A, désolidarisé du bloc 81 et de l'élément 76C). Ce verrou se présente sous une forme de tige cylindrique à trois parties ou étages, soit deux parties extérieures 83A, 83B présentant un diamètre D1 et une partie centrale 83C présentant un diamètre D2, cette tige étant coulissable dans un alésage correspondant (non référencé) du bloc 81. Le verrou est orienté orthogonalement par rapport à l'axe du poussoir 74.

Par ailleurs, la patte 94 comporte un alésage 96 présentant sur le dessus une fente 95, comme on l'aperçoit par exemple à la figure 11B, et plus en détail à la figure 12D (vue de face, à plus grande échelle, de cette patte). Le diamètre de l'alésage 96 correspond au diamètre D1 des étages extérieurs 83A, 83B du verrou 83 et l'ouverture de la fente 95 correspond au diamètre D2 de l'étage central 83C dudit verrou, avec un très léger jeu pour ce qui concerne l'alésage 96 et un jeu un peu plus important pour ce qui concerne la largeur de la fente 95.

Une fois que le module 70 (poussoir) est ainsi venu épouser le module 90 (drapeau), ce dernier est actionné vers l'avant (flèche A), emmenant avec lui le bloc-verrou 81. Concomitamment, en cours d'avancement (voir figure 12C), le tenon 85 se dégage du logement 75 du porte-poussoir 76A et la partie 83B du verrou est chassée dans l'alésage 96 de la patte 94 du drapeau (flèche F) sous l'action des plans obliques de guidage 82A, 82B des glissières 82 (dont l'écartement correspond, bien entendu, à la longueur du verrou 83). Les modules 70 (plus précisément l'ensemble 76C (porte-poussoir), 74 (poussoir) et 81 (bloc-verrou)) et 90 sont ainsi verrouillés.

A l'état verrouillé, la tige-poussoir 74 va effectuer une avancée définie sous l'action du moteur 91 entraînant le drapeau, puis revenir en arrière (sans qu'il y ait déverrouillage), cela autant de fois qu'il le faut, selon les opérations d'usinages prévues et programmées.

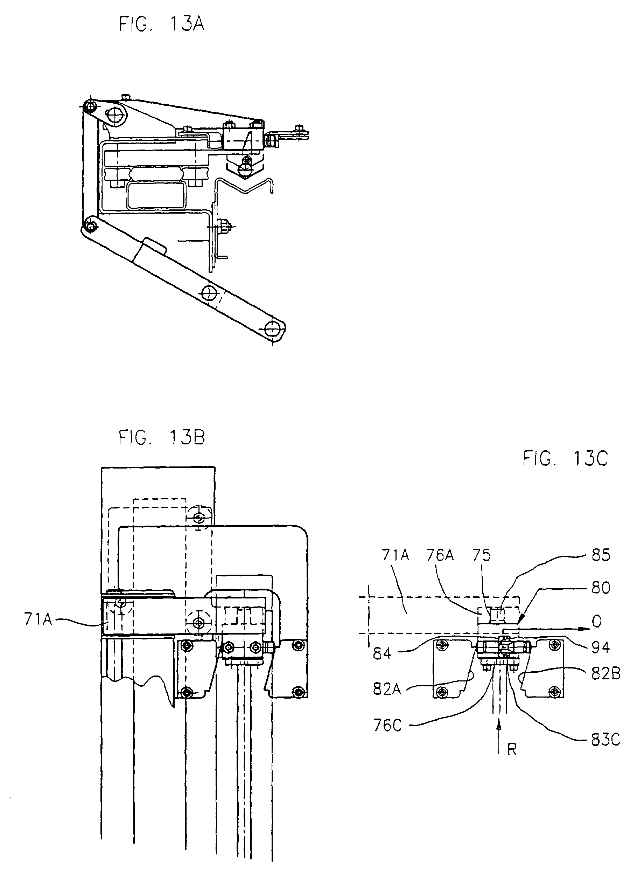

Les figures 13A, 13B, 13C montrent le dispositif 80 et les modules 70, 90 à l'état déverouillé (position 0°/360°), qu'il convient de rétablir lorsque, d'une part, les opérations d'usinage sont terminées et que l'on souhaite charger la barre suivante de la trémie 24 sur le banc 22 (on se reportera aux explications faites plus haut, à l'appui de la Fig. 9, lorsque la barre usinée doit auparavant être extraite du tour par le ravitailleur).

Le drapeau 90 est replacé dans sa position initiale ou de départ (sens de la flèche R sur la figure 13C), le verrou 83 étant chassé cette fois-ci dans le sens contraire de celui que nous avons vu lors du verrouillage (flèche O), sous l'action des plans de guidage 82A, 82B, de sorte que l'étage 83C, de diamètre D2, du verrou 83 se place en regard de la fente 95 de la patte 94 du drapeau, le tenon 85 du bloc 81 se replaçant dans le même temps dans le logement 75 du porte-poussoir 76A solidaire de l'étrier 71A.

Le dispositif de chargement/déchargement peut à nouveau être actionné, le module 70 et le dispositif de verrouillage/déverrouillage, à nouveau reliés, pouvant se dégager de la patte 94 du drapeau et adopter progressivement la position haute lorsque l'angle α aura atteint 60° (position haute qui sera maintenue tout au long du chargement (voir supra)).

On conçoit que ce nouveau dispositif de verrouillage intégré permet d'améliorer le rendement des ravitailleurs et est de fabrication simple, donc peu coûteux, un seul et même chariot 98 mettant en mouvement le poussoir 74 du module 70 et le drapeau 92 du module 90.

Il va de soi que toutes les opérations relatives au chargement/déchargement/retrait et d'avancement de barres peuvent être commandées par traitement électronique de données, c'est-à-dire par un microprocesseur et être affichées sur un écran.

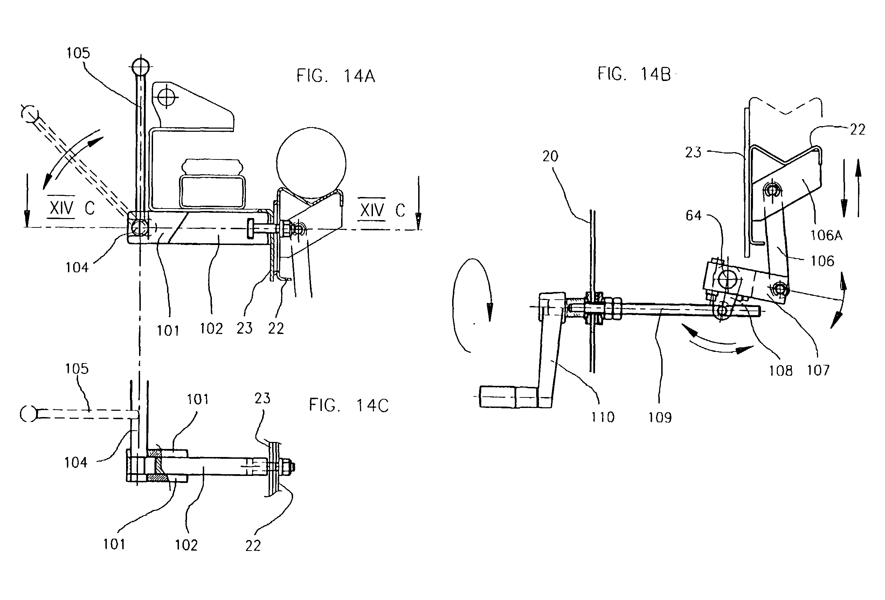

En dernier lieu, nous allons décrire encore, à l'appui des figures 14A, 14B et 14C, l'opération de centrage du banc 22. On sait en effet que pour un diamètre de barre donné, l'axe de cette barre, lorsqu'elle se trouve sur ledit banc, doit avoir le même support que l'axe de la poupée.

La figure 14A est une coupe transversale du berceau selon un plan passant par l'une des manettes 105 représentées à la figure 4A (au nombre de trois selon l'exemple). La première opération consiste à libérer le banc 22 du conduit 23. Cette libération est obtenue en actionnant les trois manettes vers le bas (la position basse d'une manette 105 est représentée en trait pointillé à la figure 14A). Chacune des manettes agit sur un excentrique 104 (voir aussi Fig. 14C, qui est une coupe selon la ligne XIVC-XIVC de la figure 14A). La rotation de l'excentrique 104 provoque le relâchement d'un tirant 102 (qui se dégage d'une butée 101) et, ainsi, la libération de la pression du conduit 23 sur le banc 22.

La deuxième opération, l'opération de centrage proprement dit (voir Fig. 14B), consiste à actionner dans un sens ou dans l'autre une manivelle 110 (à gauche du bâti 20), ce qui provoque la montée ou la descente souhaitée du banc 22. En effet, la rotation de la manivelle 110, et par conséquent d'une vis 109, provoque un mouvement de rotation d'une noix 108 et d'un levier 107 autour de l'arbre 64 (qui est l'arbre autour duquel les leviers 61, 62 sont montés articulés). Ce levier 107 agit alors sur le banc 22 par l'intermédiaire d'un tirant 106 et d'un renfort 106A.

Lorsque la position souhaitée du banc 22 est atteinte, les manettes 105 sont remontées dans leur position initiale, ce qui aura pour effet de réinstaurer la pression, c'est-à-dire l'effet de serrage du conduit 23 contre le banc 22.

## Revendications

1. Dispositif d'alimentation automatique de barres, notamment pour tour CNC, appelé à être mis en oeuvre dans un appareil ravitailleur et comprenant
- un dispositif de chargement d'une barre à usiner, à partir d'une trémie vers et sur un banc et
- un dispositif d'avancement de ladite barre dans le tour, ce dispositif d'avancement comportant un module d'avancement court pourvu d'un drapeau et un module d'avancement long pourvu d'un poussoir,
le dispositif de chargement de la barre comprenant des moyens coopérant entre eux, de telle sorte que tout choc par la barre (27A) contre tout organe du ravitailleur, en particulier contre le banc (22) et la trémie (24, 24A), au cours du chargement de la barre, est écarté,
**caractérisé en ce que**
l'actionnement du dispositif de chargement est réversible de manière à permettre le déchargement d'une barre usinée (27U), ce dispositif comprenant des moyens coopérant entre eux, de telle sorte qu'au cours du déchargement de ladite barre usinée, tout choc par la barre (27U) contre tout organe du ravitailleur, en particulier contre le banc (22) et un plan incliné de réception (26), est écarté.

2. Dispositif d'alimentation selon la revendication 1,
**caractérisé en ce que** les moyens de chargement/déchargement comportent, d'une part,
- un jeu de griffes (42) solidaire d'une bascule (41),
- une came (44) entraînée par un arbre (45) relié à des moyens-moteurs (50) et présentant un arbre excentré (49), ce dernier étant lié libre en rotation au bas de la bascule et l'arbre d'entraînement pouvant tourner dans un sens comme dans l'autre,
et, d'autre part,
- un levier (61) articulé autour d'un arbre fixe (64) et coopérant avec la bascule (41) par l'intermédiaire d'un arbre mobile (51).

3. Dispositif d'alimentation selon la revendication 2, **caractérisé en ce que** le lieu géométrique d'un point placé au-dessus de l'une quelconque des griffes et correspondant au centre d'une barre à charger ou à décharger est, lorsque cette griffe part d'une position pour aboutir à cette même position de départ, une courbe (58) en forme de pétaloïde.

4. Dispositif d'alimentation selon l'une des revendications 1 à 3, **caractérisé en ce que** le module d'avancement long (70) coopère avec le dispositif de chargement/déchargement (40) par l'intermédiaire d'un dispositif (60) de sorte que les mouvements vers le haut ou vers le bas d'étriers (71A, 71B) dudit module et les mouvements dudit dispositif de chargement/déchargement sont combinés entre eux.

5. Dispositif d'alimentation selon la revendication 4, **caractérisé en ce que** le dispositif (60) comprend un jeu de deux leviers (61, 62) articulables autour d'un arbre (64), l'une des extrémités du levier (61) étant montée articulée avec la bascule (41), l'autre extrémité pouvant coopérer avec une butée (67B) agencée dans le levier (62), le levier (62) étant relié au module (70) par l'intermédiaire d'une tige de distance (63) et soumis à l'action d'un organe élastique (65), cette action étant limitée par une butée (67A).

6. Dispositif d'alimentation selon l'une des revendications 1 à 5, **caractérisé en ce que** le drapeau (92) et le poussoir (74) sont mûs par un seul et même organe (98), le module d'avancement court et le module d'avancement long coopérant entre eux par des moyens permettant de les solidariser et de les désolidariser.

7. Dispositif d'alimentation selon la revendication 6, **caractérisé en ce que** les moyens de solidarisation/désolidarisation des modules d'avancement court (90) et d'avancement long (70) sont formés d'un dispositif de verrouillage/déverrouillage (80).

8. Dispositif d'alimentation selon la revendication 6 ou 7, **caractérisé en ce que** le dispositif de verrouillage comprend
- un élément d'ancrage (94) fixé sur le module (90),
- un bloc-verrou (81) solidaire de la tige-poussoir (74) par l'intermédiaire d'un porte-poussoir (76C) et pouvant coopérer avec un porte-poussoir (76A) fixé à un étrier (71A) du module (70), cet étrier pouvant adopter une position haute ou basse en fonction de la position du dispositif de chargement/déchargement et
- une paire de glissières (82) fixées sur un élément (23) du ravitailleur et présentant deux plans obliques parallèles (82A, 82B) dont l'écartement correspond à la longueur du verrou (83).

9. Dispositif d'alimentation selon la revendication 8, **caractérisé en ce que** le bloc-verrou (81) comporte
- un verrou cylindrique (83), que ce verrou présente deux parties latérales (83A, 83B) de diamètre D1 et une partie centrale (83C) de diamètre D2, et est coulissable dans un alésage d'un diamètre correspondant à celui de D1, aménagé dans le bloc (81), le verrou étant orienté orthogonalement à l'axe du poussoir (74), et
- un logement (84).

10. Dispositif d'alimentation selon la revendication 9, **caractérisé en ce que** l'élément d'ancrage (94) est formé d'une patte pourvue d'un alésage (96) ouvert sur une fente (95), le diamètre de l'alésage (96) correspondant au diamètre des parties latérales (83A, 83B) du verrou et la largeur de la fente (95) correspondant au diamètre de la partie centrale (83C) du verrou.

11. Dispositif d'alimentation selon la revendication 9 ou 10, **caractérisé en ce que**, en position rabattue de l'étrier (71A), le drapeau se trouvant en position arrière, le bloc (81) épouse le drapeau, l'élément (94) de ce dernier pouvant s'engager dans le logement (84) et la fente (95) laissant le libre passage à la partie centrale (83C) du verrou (83), lequel est positionné dans la zone arrière des glissières (82).

12. Dispositif d'alimentation selon l'une des revendications 9 à 11, **caractérisé en ce que** le déplacement du drapeau (90) vers l'avant, c'est-à-dire vers le tour, provoque l'engagement de la partie (83B) du verrou (83) dans l'alésage (96) de l'élément d'ancrage (94) dudit drapeau, sous l'action des glissières (82), un tenon (85) du bloc (81) se dégageant dans le même temps hors d'un logement (75) aménagé dans le porte-poussoir (76A) solidaire de l'étrier (71A).

13. Dispositif d'alimentation selon l'une des revendications 9 à 11, **caractérisé en ce que** le déplacement vers l'arrière du drapeau (90) verrouillé à l'ensemble bloc-verrou (81), poussoir (74), provoque simultanément le déplacement de la partie (83C) du verrou vers la fente (95) de l'élément d'ancrage (94), sous l'action des glissières (81), un tenon (85) du bloc (81) s'engageant dans le même temps dans un logement (75) aménagé dans le porte-poussoir (76A) solidaire de l'étrier (71A).

14. Dispositif d'alimentation selon l'une des revendications 1 à 13, **caractérisé en ce qu'**il comprend un dispositif de centrage du banc par rapport à l'axe de la poupée du tour en fonction de la situation de l'axe de la barre posée sur le banc du ravitailleur, ce dispositif de centrage comprenant des moyens (104, 105) permettant, soit de libérer la pression d'application du banc (22) contre le conduit (23), le moyen (104) provoquant le relâchement d'un tirant (102) coopérant avec l'ensemble (22, 23), soit de réinstaurer cette pression, ces mêmes moyens (104, 105) provoquant le resserrage du tirant (102).

15. Dispositif d'alimentation selon la revendication 14, **caractérisé en ce que** le réglage en hauteur du banc est obtenu par manoeuvre d'une manivelle (110), cette dernière agissant sur une vis (109) faisant actionner un dispositif de leviers (107, 108), ce dernier étant relié au banc (22) par une tige de liaison (106).

16. Dispositif d'alimentation selon la revendication 15, **caractérisé en ce que** le dispositif de leviers (107, 108) comprend une noix (108) coopérant avec la tige filetée (109) et l'arbre d'articulation (64), et un levier (107) coopérant avec ledit arbre (64) et la partie inférieure de la tige de liaison (106), les éléments (108, 107) présentant une aptitude à la rotation.

17. Appareil ravitailleur équipé d'un dispositif d'alimentation automatique de barres selon l'une quelconque des revendications 1 à 16.

18. Utilisation du dispositif d'alimentation selon la revendication 2 ou 3, **caractérisé en ce que** une première barre (27A) est saisie par la partie supérieure des griffes (42), est dégagée hors de la trémie (24) dans un mouvement ascendant des griffes, la trémie comportant des entailles (24F) permettant le passage desdites griffes à travers elle, qu'elle est posée sur le banc (22) dans un mouvement descendant desdites griffes, que cette première barre (27A) reste dans le siège (43) que forme ladite partie supérieure tout au long du transport séparant cette saisie et cette pose, qu'au cours du mouvement ascendant dudit transport la barre suivante (27B) demeure d'abord appliquée contre la première barre (27A) le long d'une ligne d'appui (28), laquelle passe progressivement aux flancs arrières (42A) des griffes, puis de ces flancs arrières contre un rebord (24A) de la trémie, et qu'au cours du mouvement descendant dudit transport, ladite première barre (27A) est retenue par et recueillie sur le banc (22) sous lequel passent les griffes, ce banc comportant des entailles (22F) permettant ce passage, les mouvements ascendants et descendants n'étant suivis d'aucun choc.

19. utilisation du dispositif d'alimentation selon la revendication 2 ou 3, **caractérisé en ce qu'**une barre usinée (27U) est saisie par la partie supérieure des griffes et est soulevée du banc (22) par le dessous dans un mouvement ascendant desdites griffes, le banc (22) comportant des entailles (22F) permettant le passage des griffes à travers lui, que cette barre usinée (27U) est posée sur un plan incliné (26) de réception dans un mouvement descendant desdites griffes, cette barre restant dans le siège (43) que forme ladite partie supérieure tout au long du transport séparant cette saisie et cette pose, et qu'au cours dudit mouvement descendant, ladite barre (27U) est recueillie par ledit plan incliné (26) sous lequel passent les griffes, ce plan comportant des entailles permettant ce passage, les mouvements ascendants et descendants n'étant suivis d'aucun choc.

20. Utilisation du dispositif d'alimentation selon la des revendication 2 ou 3, **caractérisé en ce que** les positions successives du dispositif de chargement/déchargement au cours d'un cycle de chargement/déchargement peuvent être définies par un angle α dont l'une des deux branches est formée par l'axe vertical (45A) de l'arbre d'entraînement (45) et l'autre branche par la droite rejoignant les centres dudit arbre d'entraînement (45) et de l'arbre excentré (49), cette dernière pouvant se confondre avec l'axe de symétrie (44A) de la came (44).

21. Utilisation du dispositif d'alimentation selon la revendication 2 ou 3, **caractérisé en ce qu'**au cours d'un cycle de chargement/déchargement, l'angle α passe d'un angle α₁ à α₂ et inversement.

22. Utilisation du dispositif d'alimentation selon la revendication 2 ou 3, **caractérisé en ce que** le module d'avancement long (70) est en position haute lorsque l'angle α varie de α₁ à α₂, et est en position basse lorsque l'angle α est de 0° ou 360°, cette position basse étant atteinte progressivement lorsque α passe de 0° à α₁ ou de α₂ à 360°.

23. Utilisation du dispositif d'alimentation selon la revendication 4 ou 5, **caractérisé en ce que** α₁, α₂ est approximativement égal à 60° et à 315° respectivement.

24. Utilisation du dispositif d'alimentation selon l'une des revendications 2, 3, 4 ou 5, **caractérisé en ce que** le banc (22) reste immobile au cours des opérations de chargement/déchargement.

25. Utilisation de l'appareil ravitailleur selon la revendication 17.

## Patentansprüche

1. Automatische Stangenzuführung, namentlich für CNC-Drehmaschinen, zur Verwendung in einem Stangenmagazin, enthaltend
- eine Vorrichtung zum Laden einer zu bearbeitenden Stange aus einem Magazinlader auf ein Bett sowie
- eine Vorrichtung zum Vorschub der Stange in der Drehmaschine, wobei die Vorschubvorrichtung ein kurzes Vorschubmodul mit einer Fahne und ein langes Vorschubmodul mit einem Schieber aufweist,
wobei die Vorrichtung zum Laden der Stange Mittel aufweist, welche derart zusammenwirken, dass ein Aufprall der Stange (27A) auf irgend ein Organ des Stangenmagazins, insbesondere auf das Bett (22) und den Magazinlader (24, 24A), beim Laden der Stange vermieden wird,
**dadurch gekennzeichnet, dass**
die Ladevorrichtung umgekehrt betätigbar ist, um das Entladen einer bearbeiteten Stange (27U) zu gestatten, wobei diese Vorrichtung Mittel aufweist, welche derart zusammenwirkenden, dass ein Aufprall der Stange (27A) auf irgend ein Organ des Stangenmagazins, insbesondere auf das Bett (22) und auf eine geneigte Aufnahmefläche (26), beim Entladen der bearbeiteten Stange vermieden wird.

2. Stangenzuführung nach Anspruch 1, **dadurch gekennzeichnet, dass** die Mittel zum Laden/Entladen einerseits
- eine Anzahl von mit einer Wippe (41) verbundenen Klauen (42) sowie
- einen Nocken (44) beinhalten, der von einer Welle (45) angetrieben wird, die mit Antriebsmitteln (50) verbunden ist und eine exzentrische Welle (49) aufweist, welche frei drehbar mit dem unteren Teil der Wippe verbunden ist, wobei die Antriebswelle in beide Richtungen drehbar ist,
und andererseits
- einen um eine feststehende Achse (64) schwenkbaren Hebel (61), der über eine bewegliche Welle (51) mit der Wippe (41) zusammenwirkt.

3. Stangenzuführung nach Anspruch 2, **dadurch gekennzeichnet, dass** der geometrische Ort eines Punktes oberhalb einer beliebigen Klaue, der dem Mittelpunkt einer zu ladenden oder zu entladenden Stange entspricht, während der Bewegung der Klaue aus einer Stellung zurück zu derselben Ausgangsstellung eine petaloïde Kurve ist.

4. Stangenzuführung nach einem der Ansprüche 1 bis 3, **dadurch gekennzeichnet, dass** das lange Vorschubmodul (70) über eine Vorrichtung (60) derart mit der Lade/Entladevorrichtung (40) zusammenwirkt, dass die Aufwärts- und Abwärtsbewegungen von Bügeln (71A, 71B) des Moduls und die Bewegungen der Lade/Entladevorrichtung miteinander kombiniert sind.

5. Stangenzuführung nach Anspruch 4, **dadurch gekennzeichnet, dass** die Vorrichtung (60) eine Anordnung aus zwei um eine Achse (64) schwenkbaren Hebeln (61, 62) aufweist, wobei das eine Ende des Hebels (61) schwenkbar mit der Wippe (41) verbunden ist und das andere Ende mit einem im Hebel (62) angeordneten Anschlag (67B) zusammenwirkt, und wobei der Hebel (62) über eine Distanzstange (63) mit dem Modul (70) verbunden ist und unter der Wirkung eines elastischen Organs (65) steht, welche durch einen Anschlag (67A) begrenzt ist.

6. Stangenzuführung nach einem der Ansprüche 1 bis 5, **dadurch gekennzeichnet, dass** die Fahne (92) und der Schieber (74) von ein und demselben Organ (98) bewegt werden, wobei das kurze Vorschubmodul und das lange Vorschubmodul über Kupplungs- bzw. Entkupplungsmittel miteinander zusammenwirken.

7. Stangenzuführung nach Anspruch 6, **dadurch gekennzeichnet, dass** die Kupplungs- bzw. Entkupplungsmittel des kurzen (90) und des langen (70) Vorschubmoduls aus einer Verriegelungs-/Entriegelungsvorrichtung bestehen.

8. Stangenzuführung nach Anspruch 6 oder 7, **dadurch gekennzeichnet, dass** die Verriegelungsvorrichtung
- eine am Modul (90) befestigte Verankerung (94),
- einen Verriegelungsblock (81), der über einen Schieberträger (76C) mit der Schubstange (74) verbunden ist und mit einem Schieberträger (76A) zusammenwirkt, der an einem Bügel (71A) des Moduls befestigt ist, welcher Bügel je nach der Stellung der Lade- und Entladevorrichtung eine obere bzw. untere Stellung einnehmen kann, und
- zwei Gleitschienen (82) aufweist, welche an einem Teil (23) des Stangenmagazins befestigt sind und zwei parallele geneigte Ebenen (82A, 82B) aufweisen, deren Abstand der Länge des Riegels (83) entspricht.

9. Stangenzuführung nach Anspruch 8, **dadurch gekennzeichnet, dass** der Verriegelungsblock (81)
- einen zylindrischen Riegel (83) aufweist, und dass dieser Riegel zwei Seitenteile (83A, 83B) mit einem Durchmesser D1 und ein Mittelteil (83) mit einem Durchmesser D2 aufweist und in einer im Block (81) ausgeführten Bohrung verschiebbar ist, deren Durchmesser dem Durchmesser D1 entpricht, wobei der Riegel senkrecht zur Achse des Schiebers (74) steht, und
- eine Aufnahme (84).

10. Stangenzuführung nach Anspruch 9, **dadurch gekennzeichnet, dass** die Verankerung (94) aus einer Lasche mit einer in einen Schlitz (95) mündenden Bohrung (96) besteht, wobei der Durchmesser der Bohrung (96) dem Durchmesser der Seitenteile (83A, 83B) des Riegels und die Breite des Schlitzes (95) dem Durchmesser des Mittelteils (83C) des Riegels entsprechen.

11. Stangenzuführung nach Anspruch 9 oder 10, **dadurch gekennzeichnet, dass** in der unteren Stellung des Bügels (71A), und wenn sich die Fahne in der hinteren Stellung befindet, der Block (81) die Fahne berührt, wobei die Verankerung (94) derselben in die Aufnahme (84) eingreift und der Schlitz (95) den Mittelteil (83C) des Riegels (83) durchlässt, welcher sich im hinteren Bereich der Gleitschienen (82) befindet.

12. Stangenzuführung nach einem der Ansprüche 9 bis 11, **dadurch gekennzeichnet, dass** eine Verschiebung der Fahne (90) nach vorne, d.h. zur Drehmaschine hin, den Teil (83B) des Riegels unter der Wirkung der Gleitschienen (82) in die Bohrung (96) der Verankerung (94) der Fahne eingreifen lässt, wobei gleichzeitig ein Zapfen (85) des Blocks (81) aus einer Aufnahme (75) ausgefahren wird, welche in dem mit dem Bügel (71A) verbundenen Schieberträger (76A) angeordnet ist.

13. Stangenzuführung nach einem der Ansprüche 9 bis 11, **dadurch gekennzeichnet, dass** eine Verschiebung der mit der Anordnung aus dem Verriegelungsblock (81) und dem Schieber (74) verriegelten Fahne (90) zugleich eine Verschiebung des Teils (83C) des Riegels zum Schlitz (95) der Verankerung (94) unter der Wirkung der Gleitschienen (81) bewirkt, wobei gleichzeitig ein Zapfen (85) des Blocks (81) in eine Aufnahme (75) eingreift, welche in dem mit dem Bügel (71A) verbundenen Schieberträger (76A) angeordnet ist.

14. Stangenzuführung nach einem der Ansprüche 1 bis 13, **dadurch gekennzeichnet, dass** die Zuführung eine Zentriervorrichtung des Betts bezüglich der Achse des Spindelstocks der Drehmaschine in Abhängigkeit von der Lage der Achse der auf dem Bett des Stangenmagazins aufgelegten Stange aufweist, mit Mitteln (104, 105), welche entweder das Lösen des Anpressdrucks des Betts (22) gegen die Führung (23) gestatten, wobei das Mittel (104) die Entspannung einer Zugstange (102) bewirkt, der mit der Anordnung (22, 23) zusammenwirkt, oder aber die Wiederherstellung des Anpressdrucks, wobei dieselben Mittel (104, 105) das Anspannen der Zugstange (102) bewirken.

15. Stangenzuführung nach Anspruch 14, **dadurch gekennzeichnet, dass** die Höhenregulierung des Betts durch Betätigung einer Kurbel (110) erfolgt, welche auf eine Spindel (109) wirkt, die eine Hebelanordnung (107, 108) antreibt, welche über eine Verbindungsstange (106) mit dem Bett (22) verbunden ist.

16. Stangenzuführung nach Anspruch 15, **dadurch gekennzeichnet, dass** die Hebelanordung (107, 108) eine Nuss (108) aufweist, die mit der Gewindestange (109) und der Schwenkachse (64) zusammenwirkt, sowie einen Hebel (107), der mit der Achse (64) und dem unteren Teil der Verbindungsstange (106) zusammenwirkt, wobei die Teile (108, 107) drehbar sind.

17. Stangenmagazin mit einer automatischen Stangenzuführung gemäss irgendeinem der Ansprüche 1 bis 16.

18. Anwendung der Stangenzuführung nach Anspruch 2 oder 3, **dadurch gekennzeichnet, dass** eine erste Stange (27A) vom oberen Teil der Klauen (42) erfasst und in einer Aufwärtbewegung der Klauen aus dem Magazinlader (24) gehoben wird, wobei der Magazinlader Einschnitte (24F) aufweist, welche den Durchgang der Klauen durch den Magazinlader gestatten, dass die Stange in einer Abwärtsbewegung der Klauen auf das Bett (22) aufgelegt wird und diese erste Stange (27A) während dem ganzen Transport vom Ergreifen bis zum Ablegen in der durch den oberen Teil gebildeten Aufnahme (43) verbleibt, dass die nächste Stange (27B) während der Aufwärts- Transportbewegung zunächst längs einer Berührungslinie (28) auf der ersten Stange (27A) aufliegt, wobei sich die Berührungslinie allmählich zu den hinteren Flanken (42A) der Klauen verschiebt und danach von diesen hinteren Flanken zu einer Kante (24A) des Magazinladers, und dass die genannte erste Stange (27A) während der Abwärts-Transportbewegung vom Bett (22) festgehalten und aufgenommen wird, unter welchem die Klauen hindurchgehen, wobei das Bett Einschnitte (22F) aufweist, welche den Durchgang gestatten, und die Aufwärts- und Abwärtsbewegung keinerlei Stösse bewirken.

19. Anwendung der Stangenzuführung nach Anspruch 2 oder 3, **dadurch gekennzeichnet, dass** eine bearbeitete Stange (27U) vom oberen Teil der Klauen ergriffen und in einer Aufwärtsbewegung der Klauen von unten her vom Bett (22) abgehoben wird, wobei das Bett (22) Einschnitte (22F) aufweist, welche den Durchgang der Klauen gestatten, dass die bearbeitete Stange (27U) in einer Abwärtsbewegung der Klauen auf eine geneigte Aufnahmefläche (26) aufgelegt wird und die Stange während dem ganzen Transport vom Ergreifen bis zum Ablegen in der durch den oberen Teil gebildeten Aufnahme (43) verbleibt, und dass die Stange (27U) im Verlauf der erwähnten Abwärtsbewegung von der geneigten Fläche (26) aufgenommen wird, unter welcher die Klauen hindurchgehen, wobei die Fläche Einschnitte aufweist, welche den Durchgang gestatten, und die Aufwärts- und Abwärtsbewegung keinerlei Stösse bewirken.

20. Anwendung der Stangenzuführung nach einem der Ansprüche 2 oder 3, **dadurch gekennzeichnet, dass** die aufeinanderfolgenden Stellungen der Lade-/Entladevorrichtung im Verlauf eines Lade-/Entladezyklus durch einen Winkel α definiert sind, dessen einer Schenkel durch die senkrechte Achse (45A) der Antriebswelle (45) gebildet wird und der andere Schenkel durch die Gerade, welche die Mittelpunkte der Antriebswelle (45) und der exzentrischen Welle (49) verbindet, und welche mit der Symmetrieachse (44A) des Nockens (44) zusammenfallen kann.

21. Anwendung der Stangenzuführung nach einem der Ansprüche 2 oder 3, **dadurch gekennzeichnet, dass** der Winkel α im Verlauf eines Lade-/Entladezyklus von α₁ zu α₂ ändert und umgekehrt.

22. Anwendung der Stangenzuführung nach einem der Ansprüche 2 oder 3, **dadurch gekennzeichnet, dass** sich das lange Vorschubmodul (70) in der oberen Stellung befindet, wenn der Winkel α von α₁ zu α₂ ändert, und in der unteren Stellung, wenn der Winkel α 0° oder 360° beträgt, wobei die untere Stellung allmählich erreicht wird, wenn α von 0° zu α₁ oder von α₂ zu 360° ändert.

23. Anwendung der Stangenzuführung nach einem der Ansprüche 4 der 5 **dadurch gekennzeichnet, dass** α₁, α₂ ungefähr 60° bzw. 315° betragen.

24. Anwendung der Stangenzuführung nach einem der Ansprüche 2, 3, 4 oder 5, **dadurch gekennzeichnet, dass** das Bett (22) im Verlauf der Lade-/Entladevorgänge unbeweglich bleibt.

25. Anwendung der Stangenzuführung nach Anspruch 17.

## Claims

1. Automatic bar feeder device, particularly for CNC lathes, intended to be used in a magazine bar feed, comprising
- a device for loading a bar to be machined from a hopper towards and onto a bench, and
- a device for advancing the bar into the lathe, the advancing device containing a short advance module equipped with a flag, and a long advance module equipped with a thrustor,
the bar loading device comprising means coacting together in such a manner that any shock exerted by the bar (27A) against any element of the magazine bar feed, in particular against the bench (22) and the hopper (24, 24A), during the bar loading operation is avoided,
**characterised in that** the operation of the loading device is reversible in order to allow the unloading of a machined bar (27U), the latter device comprising means coacting in such a manner that any shock exerted by the machined bar (27U) against any element of the magazine bar feed, in particular against the bench (22) and an inclined receiving plane (26), is avoided during the operation of unloading the machined bar.

2. Feeder device according to claim 1, **characterised in that** the loading/unloading means comprise, on one hand,
- a set of claws (42) integral with a seesaw (41),
- a cam (44) driven by a shaft (45) connected to motor means (50) and having an eccentric shaft (49) that is connected freely rotatably to the lower portion of the seesaw, the driving shaft being rotatable in either direction,
and, on the other hand,
- a lever (61) articulated around a fixed axle (64) and coacting with the seesaw (41) through a mobile shaft (51).

3. Feeder device according to claim 2, **characterised in that** the geometric locus of a point situated above any one of the claws and corresponding to the centre of a bar to be loaded or unloaded is a petaloid curve (58) when the claw starts from a given position and comes back to the same starting position.

4. Feeder device according to one of claims 1 to 3, **characterised in that** the long advance module (70) coacts with the loading/unloading device (40) through a device (60) in such a manner that the upward and downward movements of stirrups (71A, 71B) of the module and the movements of the loading/unloading device are combined with each other.

5. Feeder device according to claim 4, **characterised in that** the device (60) comprises a set of two levers (61, 62) capable of moving around a shaft (64), one of the ends of the lever (61) being pivotably connected to the seesaw (41), the other end being capable of coacting with a stop (67B) disposed in the lever (62), the lever (62) being connected to the module (70) through a distance rod (63) and subject to the action of an elastic element (65), this action being limited by a stop (67A).

6. Feeder device according to one of claims 1 to 5, **characterised in that** the flag (92) and the thrustor (74) are driven by one and the same element (98), the short advance module and the long advance module coacting with each other through means allowing their coupling and uncoupling.

7. Feeder device according to claim 6, **characterised in that** the coupling/uncoupling means of the short advance module (90) and the long advance module (70) are formed of a latching and unlatching device (80).

8. Feeder device according to claim 6 or 7, **characterised in that** the latching device comprises
- and anchoring element (94) fastened to the module (90),
- a latching block (81) made integral with the thrustor rod (74) through a thrustor support (76C) and capable of coacting with a thrustor support (76A) fastened to a stirrup (71A) of the module (70), the stirrup being capable of taking a high or low position in function of the position of the loading/unloading device, and
- a pair of sliding rails (82) fastened to an element (23) of the magazine bar feed and having two parallel oblique planes (82A, 82B) whose distance corresponds to the length of the latch (83).

9. Feeder device according to claim 8, **characterised in that** the latching block (81) comprises
- a cylindrical latch (83), the latter having two lateral portions (83A, 83B) of a diameter D1 and a central portion (83C) of a diameter D2 and being slidable within a bore whose diameter corresponds to D1 and which is arranged in the block (81), the latch being disposed orthogonally with respect to the axis of the thrustor (74), and
- a lodging (84).

10. Feeder device according to claim 9, **characterised in that** the anchoring element (94) is formed by a paw having a bore (96) opening into a slot (95), the diameter of the bore (96) corresponding to the diameter of the lateral portions (83A, 83B) of the latch, and the width of the slot (95) corresponding to the diameter of the central portion (83C) of the latch.

11. Feeder device according to claim 9 or 10,
**characterised in that** when the stirrup (71A) is lowered and the flag is in its rear position, the latching block (81) encloses the flag, the element (94) of the flag being capable of engaging in the lodging (84) and the slot (95) leaving free passage to the central portion (83C) of the latch (83) which is positioned in the rear area of the sliding rails (82).

12. Feeder device according to one of claims 9 to 11,
**characterised in that** the forward displacement of the flag (90), i.e. towards the lathe, causes the engagement of the portion (83B) of the latch (83) in the bore (96) of the anchoring element (94) of the flag, under the action of the sliding rails (82), a plug (85) of the block (81) being simultaneously disengaged from a lodging (75) disposed in the thrustor support (76A) that is integral with the stirrup (71A).

13. Feeder device according to one of claims 9 to 11,
**characterised in that** the rearward displacement of the flag (90) latched to the combined latching block (81) and thrustor (74) simultaneously causes the displacement of the portion (83C) of the latch towards the slot (95) of the anchoring element (94) under the action of the sliding rails (81), a plug (85) of the block (81) being simultaneously engaged in a lodging (75) disposed in the thrustor support (76A) that is integral with the stirrup (71A).

14. Feeder device according to one of claims 1 to 13, **characterised in that** it comprises a device for centering the bench with respect to the axis of the headstock of the lathe in function of the situation of the axis of a bar laid down on the bench of the magazine bar feed, the centering device comprising means (104, 105) for either releasing the pressure applied to the conduit (23) by the bench (22), the means (104) causing the release of a tension rod (102) coacting with the assembly (22, 23), or for reestablishing that pressure, those same means (104, 105) allowing the tightening of the tension rod (102).

15. Feeder device according to claim 14, **characterised in that** the height adjustment of the bench is obtained by actuating a crank (110) acting upon a screw (109) driving a lever device (107, 108), the latter being connected to the bench (22) through a connecting rod (106).

16. Feeder device according to claim 15, **characterised in that** the lever device (107, 108) comprises a nut (108) coacting with the threaded rod (109) and the hinge axle (64), as well as a lever (107) coacting with the axle (64) and the lower portion of the connecting rod (106), the elements (108, 107) being rotatable.

17. Magazine bar feed provided with an automatic bar feeder device according to any one of claims 1 to 16.

18. Application of the feeder device according to claim 2 or 3, **characterised in that** a first bar (27A) is seized by the upper portions of the claws (42), disengaged from the hopper (24) in an ascending movement of the claws, the hopper comprising incisions (24F) allowing the passage of the claws therethrough, **in that** the bar is laid down on the bench (22) in a descending movement of the claws, **in that** the first bar (27A) remains in the seat (43) formed by the mentioned upper portions during the entire transport between seizing it and laying it down, **in that** during the ascending movement of the transport, the following bar (27B) first remains pressed against the first bar (27A) along a contact line (28) that progressively moves to the rear flanks (42A) of the claws and then from the rear flanks to an edge (24A) of the hopper, and **in that** during the descending movement of the transport, the first bar (27A) is retained and received by the bench (22) under which pass the claws, the bench comprising incisions (22F) allowing that passage, and the ascending and descending movements being free of shocks.

19. Application of the feeder device according to claims 2 or 3, **characterised in that** a machined bar (27U) is seized by the upper portions of the claws and lifted off from the bench (22) from below in an ascending movement of the claws, the bench (22) comprising incisions (22F) allowing the passage of the claws therethrough, **in that** the machined bar (27U) is laid down on an inclined receiving plane (26) in a descending movement of the claws, the bar remaining in the seat (43) formed by the mentioned upper portions during the entire transport between seizing it and laying it down, and **in that** during the descending movement, the bar (27U) is received by the inclined plane (26) under which pass the claws, the plane comprising incisions allowing that passage, and the ascending and descending movements being free of shocks.

20. Application of the feeder device according to claim 2 or 3, **characterised in that** the successive positions of the loading/unloading device during a loading/unloading cycle can be defined by an angle α, one leg of which is formed by the vertical axis (45A) of the driving shaft (45) and the other leg by the straight line connecting the centres of the driving shaft (45) and of the eccentric axle (49), the latter possibly being identical with the axis of symmetry (44A) of the cam (44).

21. Application of the feeder device according to claim 2 or 3, **characterised in that** during a loading/unloading cycle, the angle α varies from an angle α₁ to an angle α₂ and vice-versa.

22. Application of the feeder device according to claim 2 or 3, **characterised in that** the long advance module (70) is in the high position when the angle α varies from α₁ to α₂, and in the low position when the angle α is 0° or 360°, the low position being progressively reached when α passes from 0° to α₁ or from α₂ to 360°.

23. Application of the feeder device according to claim 4 or 5, **characterised in that** α₁, α₂ is approximately equal to 60° and 315°, respectively.

24. Application of the feeder device according to one of claims 2, 3, 4, or 5, **characterised in that** the bench (22) remains stationary during the loading/unloading operations.

25. Application of the feeder device according to claim 17.
